(19) Europäisches Patentamt
European Patent Office
Office européen des brevets

(11) **EP 3 417 029 B1**

(12) **EUROPÄISCHE PATENTSCHRIFT**

(45) Veröffentlichungstag und Bekanntmachung des Hinweises auf die Patenterteilung:
**08.12.2021 Patentblatt 2021/49**

(51) Int Cl.:
*C09J 133/08* (2006.01)    *C08F 220/18* (2006.01)
*C09J 7/22* (2018.01)    *C09J 7/38* (2018.01)

(21) Anmeldenummer: **17706194.2**

(22) Anmeldetag: **16.02.2017**

(86) Internationale Anmeldenummer:
**PCT/EP2017/053536**

(87) Internationale Veröffentlichungsnummer:
**WO 2017/140801 (24.08.2017 Gazette 2017/34)**

(54) **HAFTKLEBESTREIFEN**

ADHESIVE STRIPS

BANDE AUTOADHÉSIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.02.2016 DE 102016202479**

(43) Veröffentlichungstag der Anmeldung:
**26.12.2018 Patentblatt 2018/52**

(73) Patentinhaber: **tesa SE**
**22848 Norderstedt (DE)**

(72) Erfinder:
• **LOHMANN, Franciska**
**22523 Hamburg (DE)**

• **PETERSEN, Anika**
**24598 Heidmühlen (DE)**
• **BURMEISTER, Axel**
**22527 Hamburg (DE)**
• **HOSER, Mathias**
**22529 Hamburg (DE)**

(74) Vertreter: **tesa SE**
**Hugo-Kirchberg-Straße 1**
**22848 Norderstedt (DE)**

(56) Entgegenhaltungen:
**EP-A1- 2 578 654        WO-A1-01/56777**
**DE-A1-102008 004 388**

**Beschreibung**

Die Erfindung betrifft einen Haftklebestreifen.

Klebebänder werden häufig für die Verklebung von Kleinstbauteilen beispielsweise in Geräten in der Consumer-Elektronik-Industrie verwendet. Um dies zu ermöglichen, ist es erforderlich, dass die Form des Klebebandabschnittes der Form des Bauteils angepasst ist. Hierbei sind oft auch schwierige Geometrien nötig, welche durch Stanzen des Klebebandes erhalten werden. So sind Stegbreiten bei Stanzteilen von wenigen Millimetern keine Seltenheit. Bei der Applikation dieser empfindlichen Klebebänder auf die Bauteile kommt es häufig zur Verformung der Stanzteile.

Um die Verformung zu unterdrücken oder zumindest zu reduzieren, hat es sich als vorteilhaft herausgestellt, in die Klebebänder als mittlere Lage eine Folie, zum Beispiel eine PET-Folie, zu integrieren, um die Zugkräfte bei der Applikation aufzufangen.

Verklebungen mit solchen Klebebändern werden zunehmend auch verwendet, wenn das Bauteil Schockbelastungen ausgesetzt ist. Als besonders schockbeständig haben sich Verklebungen mit Haftklebestreifen herausgestellt, welche einen viskoelastischen, syntaktisch geschäumten Kern, eine stabilisierende Folie und auf den Außenlagen zwei selbstklebende Klebeschichten aufweisen.

Diese Haftklebestreifen sind derart leistungsfähig, dass unter Schockbelastung ein kohäsiver Bruch innerhalb des Haftklebestreifens zu beobachten ist. Die Verbindung zwischen dem geschäumten Kern und der stabilisierenden Folie versagt, und Schaum und Folie lösen sich voneinander.

Geschäumte Haftklebemassensysteme sind seit längerem bekannt und im Stand der Technik beschrieben.

Grundsätzlich lassen sich Polymerschäume auf zwei Wegen herstellen. Zum einen durch die Einwirkung eines Treibgases, sei es als solches zugesetzt oder aus einer chemischen Reaktion resultierend, zum anderen durch die Einarbeitung von Hohlkugeln in die Werkstoffmatrix. Schäume, die auf letzterem Wege hergestellt werden, werden als syntaktische Schäume bezeichnet.

Bei einem syntaktischen Schaum sind Hohlkugeln wie Glaskugeln oder keramische Hohlkugeln (Mikrokugeln) oder Mikroballons in einer Polymermatrix eingebunden. Dadurch sind bei einem syntaktischen Schaum die Hohlräume voneinander getrennt und die in den Hohlräumen befindlichen Substanzen (Gas, Luft) durch eine Membran von der umgebenden Matrix abgetrennt.

Mit Mikrohohlkugeln geschäumte Massen zeichnen sich durch eine definierte Zellstruktur mit einer gleichmäßigen Größenverteilung der Schaumzellen aus. Mit Mikrohohlkugeln werden geschlossenzellige Schäume ohne Kavitäten erhalten, die sich im Vergleich zu offenzelligen Varianten unter anderem durch eine bessere Abdichtungswirkung gegen Staub und flüssige Medien auszeichnen. Darüber hinaus sind chemisch oder physikalisch geschäumte Materialien anfälliger für ein irreversibles Zusammenfallen unter Druck und Temperatur und zeigen häufig eine niedrigere Kohäsionsfestigkeit.

Besonders vorteilhafte Eigenschaften lassen sich erzielen, wenn als Mikrokugeln zur Schäumung expandierbare Mikrokugeln (auch als "Mikroballons" bezeichnet) eingesetzt werden. Durch ihre flexible, thermoplastische Polymerschale besitzen derartige Schäume eine höhere Anpassungsfähigkeit als solche, die mit nicht expandierbaren, nicht polymeren Mikrohohlkugeln (beispielsweise Glashohlkugeln) gefüllt sind. Sie eignen sich besser zum Ausgleich von Fertigungstoleranzen, wie sie zum Beispiel bei Spritzgussteilen die Regel sind, und können aufgrund ihres Schaumcharakters auch thermische Spannungen besser kompensieren.

Des Weiteren können durch die Auswahl des thermoplastischen Harzes der Polymerschale die mechanischen Eigenschaften des Schaums weiter beeinflusst werden. So ist es beispielsweise möglich, selbst dann, wenn der Schaum eine geringere Dichte als die Matrix aufweist, Schäume mit höherer Kohäsionsfestigkeit als mit der Polymermatrix allein herzustellen. So können typische Schaumeigenschaften wie die Anpassungsfähigkeit an raue Untergründe mit einer hohen Kohäsionsfestigkeit für selbstklebende Schäume kombiniert werden.

Zu den Geräten in der Consumer-Elektronik-Industrie zählen elektronische, optische und feinmechanische Geräte im Sinne dieser Anmeldung insbesondere solche Geräte, wie sie in Klasse 9 der Internationalen Klassifikation von Waren und Dienstleistungen für die Eintragung von Marken (Klassifikation von Nizza); 10. Ausgabe (NCL(10-2013)); einzuordnen sind, sofern es sich dabei um elektronische, optische oder feinmechanische Geräte handelt, weiterhin Uhren und Zeitmessgeräte gemäß Klasse 14 (NCL(10-2013)), wie insbesondere

- Wissenschaftliche, Schifffahrts-, Vermessungs-, fotografische, Film-, optische, Wäge-, Mess-, Signal-, Kontroll-, Rettungs- und Unterrichtsapparate und -instrumente;
- Apparate und Instrumente zum Leiten, Schalten, Umwandeln, Speichern, Regeln und Kontrollieren von Elektrizität;
- Bildaufzeichnungs-, -verarbeitungs-, -übertragungs- und -wiedergabegeräte, wie beispielweise Fernseher und dergleichen
- Akustische Aufzeichnungs-, Verarbeitungs-, -übertragungs- und -wiedergabegeräte, wie beispielsweise Rundfunkgeräte und dergleichen
- Computer, Rechengeräte und Datenverarbeitungsgeräte, mathematische Geräte und Instrumente, Computerzubehör, Bürogeräte - wie beispielsweise Drucker, Faxgeräte, Kopiergeräte, Schreibmaschinen -, Datenspeichergeräte
- Fernkommunikations- und Multifunktionsgeräte mit Fernkommunikationsfunktion, wie beispielsweise Telefone, Anrufbeantworter
- Chemische und physikalische Messgeräte, Steuergeräte und Instrumente, wie beispielweise Akkumulatorladegeräte, Multimeter, Lampen, Tachometer
- Nautische Geräte und Instrumente
- Optische Geräte und Instrumente
- Medizinische Geräte und Instrumente und solche für Sportler
- Uhren und Chronometer
- Solarzellenmodule, wie etwa elektrochemische Farbstoff-Solarzellen, organische Solarzellen, Dünnschichtzellen,
- Feuerlöschgeräte.

Die technische Entwicklung richtet sich vermehrt auf solche Geräte, die immer kleiner und leichter gestaltet werden, damit sie von ihrem Besitzer jederzeit mitgeführt werden können und üblicherweise regelmäßig mitgeführt werden. Dies geschieht heute zunehmend durch Realisierung geringer Gewichte und/oder geeigneter Größe derartiger Geräte. Solche Geräte werden im Rahmen dieser Schrift auch als Mobilgeräte oder portable Geräte bezeichnet. Bei diesem Entwicklungstrend werden feinmechanische und optische Geräte zunehmend (auch) mit elektronischen Komponenten versehen, was die Möglichkeiten der Minimierung erhöht. Aufgrund des Mitführens der Mobilgeräte sind diese vermehrten - insbesondere mechanischen - Belastungen ausgesetzt, etwa durch Anstoßen an Kanten, durch Fallenlassen, durch Kontakt mit anderen harten Objekten in der Tasche, aber auch schon durch die permanente Bewegung durch das Mitführen an sich. Mobilgeräte sind aber auch stärkerer Belastungen aufgrund von Feuchtigkeitseinwirkungen, Temperatureinflüssen und dergleichen ausgesetzt als solche "immobilen" Geräte, die üblicherweise in Innenräumen installiert sind und nicht oder kaum bewegt werden.

Die Erfindung bezieht sich dementsprechend besonders bevorzugt auf Mobilgeräte, da der erfindungsgemäß eingesetzte Haftklebestreifen hier aufgrund der unerwartet guten Eigenschaften (sehr hohe Schockresistenz) einen besonderen Nutzen hat. Nachfolgend sind einige portable Geräte aufgeführt, ohne sich durch die konkret genannten Vertreter in dieser Liste bezüglich dem Gegenstand der Erfindung unnötig beschränken zu wollen.

- Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras
- Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems,
- Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads")
- Monitore, Displays, Bildschirme, berührungsempfindliche Bildschirme (Sensorbildschirme, "Touchscreen-Geräte"), Beamer
- Lesegeräte für elektronische Bücher ("E-Books"),
- Kleinfernsehgeräte, Taschenfernseher, Filmabspielgeräte, Videoabspielgeräte
- Radios (auch Klein- und Taschenrundfunkgeräte), Walkmen, Discmen, Musikabspielgeräte für zum Beispiel CD, DVD, Bluray, Kassetten, USB, MP3, Kopfhörer
- Schnurlose Telefone, Mobiltelefone, Smartphones, Funksprechgeräte, Freisprechgeräte, Personenrufgeräte (Pager, Pieper)
- Mobile Defibrillatoren, Blutzuckermessgeräte, Blutdruckmessgeräte, Schrittzähler, Pulsmesser
- Taschenlampen, Laserpointer
- Mobile Detektoren, optische Vergrößerungsgeräte, Fernsichtgeräte, Nachtsichtgeräte
- GPS-Geräte, Navigationsgeräte, tragbare Schnittstellengeräte der Satellitenkommunikation
- Datenspeichergeräte (USB-Sticks, externe Festplatten, Speicherkarten)
- Armbanduhren, Digitaluhren, Taschenuhren, Kettenuhren, Stoppuhren.

Für diese Geräte sind insbesondere Klebebänder gefordert, die eine hohe Halteleistung besitzen.
Des Weiteren ist wichtig, dass die Klebebänder in ihrer Halteleistung nicht versagen, wenn das elektronische Gerät, zum Beispiel ein Handy, fallengelassen wird und auf den Untergrund aufprallt. Der Klebestreifen muss also eine sehr hohe Schockresistenz aufweisen.
Aufgabe der Erfindung ist es, einen Haftklebestreifen zu finden, der eine besonders hohe Schockresistenz sowohl in der x,y-Ebene als auch in der z-Ebene aufweist.
Die Aufgabe wird mit einem gattungsgemäßen Haftklebestreifen erfindungsgemäß gelöst, wie er im Hauptanspruch niedergelegt ist. Gegenstand der Unteransprüche sind dabei vorteilhafte Weiterbildungen des Haftklebstreifens.

Demgemäß betrifft die Erfindung einen Haftklebestreifen aus mindestens vier, insbesondere genau vier Schichten, umfassend

- eine Schicht A mit einer Ober- und einer Unterseite aus einer geschäumten Klebemasse, die auf einer selbstklebenden Acrylatmasse basiert,
- eine Schicht B aus einem Folienträger, wobei die Schicht B auf der Unterseite der Schicht A angeordnet ist, wobei zumindest die der Schicht A zugewandte Hauptfläche, vorzugsweise beide Hauptflächen des Folienträgers geätzt sind, wobei die Oberfläche der Schicht A und die Oberfläche der Schicht B in direktem Kontakt miteinander stehen,
- eine Schicht C aus einer selbstklebenden Masse, die auf der Oberseite der Schicht A angeordnet ist und die auf einer selbstklebenden Acrylatmasse basiert,
- eine Schicht D aus einer selbstklebenden Masse, die auf der der Schicht A gegenüberliegenden Seite der Schicht B angeordnet ist und die auf einer selbstklebenden Acrylatmasse basiert.

In der vorliegenden Anmeldung kann als Synonym für den Begriff "Folienträger" auch der Begriff "Folie" eingesetzt werden.

Die selbstklebenden Acrylatmassen der Schichten A, C und D sind jeweils eine Haftklebemasse (PSA; englisch: "pressure sensitive adhesives").

Haftklebemassen sind insbesondere solche polymeren Massen, die - gegebenenfalls durch geeignete Additivierung mit weiteren Komponenten wie beispielsweise Klebharzen - bei der Anwendungstemperatur (sofern nicht anders definiert, bei Raumtemperatur) dauerhaft klebrig und klebfähig sind und an einer Vielzahl von Oberflächen bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebenden Substrat hinreichend zu benetzen, damit sich zwischen der Masse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebemassen gehen unter anderem insbesondere auf deren viskoelastische Eigenschaften zurück. So können beispielsweise schwach oder stark anhaftende Klebemassen hergestellt werden; weiterhin solche, die nur einmalig und permanent verklebbar sind, so dass die Verklebung ohne Zerstörung des Klebemittels und/oder der Substrate nicht gelöst werden können, oder solche die leicht wiederablösbar und gegebenenfalls mehrfach verklebbar sind.

Haftklebemassen können grundsätzlich auf Grundlage von Polymeren unterschiedlicher chemischer Natur hergestellt werden. Die haftklebenden Eigenschaften werden unter anderem durch die Art und die Mengenverhältnisse der eingesetzten Monomere bei der Polymerisation der der Haftklebemasse zugrunde liegenden Polymere, deren mittlere Molmasse und Molmassenverteilung sowie durch Art und Menge der Zusatzstoffe der Haftklebemasse, wie Klebharze, Weichmacher und dergleichen, beeinflusst.

Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur) aufweist. Durch geeignete kohäsionssteigernde Maßnahmen, wie beispielsweise Vernetzungsreaktionen (Ausbildung brückenbildender Verknüpfungen zwischen den Makromolekülen), kann der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit und Kohäsion der Masse optimiert werden.

Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Im erfindungsgemäßen Sinne für die Schichten A, C und D verwendbar sind acrylatbasierende Klebemassen auf Lösemittelbasis, auf wässriger Basis oder auch als Hotmeltsystem, beispielsweise eine Masse auf Acrylathotmelt-Basis, wobei diese einen K-Wert von mindestens 20 aufweisen kann, insbesondere größer 30, erhältlich durch Aufkonzentrieren einer Lösung einer sol¬chen Masse zu einem als Hotmelt verarbeitbaren System.

Das Aufkonzentrieren kann in entsprechend ausgerüsteten Kesseln oder Extrudern stattfinden, insbesondere beim damit einhergehenden Entgasen ist ein Entgasungsextruder bevorzugt.

Eine derartige Klebemasse ist in der DE 43 13 008 A1 dargelegt, auf deren Inhalt hiermit Bezug genommen wird und deren Inhalt Teil dieser Offenbarung und Erfindung wird.

Die Klebemasse auf Acrylathotmelt-Basis kann chemisch vernetzt sein.

Eine Klebemasse, die sich ebenfalls als geeignet zeigt, ist eine niedrigmolekulare Acrylatschmelzhaftklebemasse wie zum Beispiel acResin® UV von BASF und Acrylatdispersionshaftklebmassen wie zum Beispiel unter dem Handelsnamen Acronal® von der BASF erhältlich.

In einer weiteren Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substi¬tuierten (Meth)acrylamiden, Maleinsäureanhydrid und anderen Vinylverbindungen wie Vinylestern, insbesondere Vinyl¬acetat, Vinylalkoholen und/oder Vinylethern eingesetzt.

Der Restlösungsmittel-Gehalt sollte unter 1 Gew.-% beitragen.

Eine andere bevorzugte Ausführungsform ist eine Haftklebemasse, die ein Polyacrylatpolymerisat, enthält. Dabei handelt es sich um ein Polymerisat, welches durch radikalische Polymerisation von Acrylmonomeren, worunter auch Methylacrylmonomere verstanden werden, und gegebenenfalls weiteren, copolymerisierbaren Monomeren erhältlich ist.

Erfindungsgemäß kann es sich um ein mit Epoxidgruppen vernetzbares Polyacrylat handeln. Entsprechend werden als Monomere oder Comonomere bevorzugt funktionelle, mit Epoxidgruppen vernetzungsfähige Monomere eingesetzt, hier kommen insbesondere Monomere mit Säuregruppen (besonders Carbonsäure-, Sulfonsäure oder Phosphonsäuregruppen) und/oder Hydroxygruppen und/oder Säureanhydridgruppen und/oder Epoxidgruppen und/oder Amingruppen zur Anwendung; bevorzugt sind carbonsäuregruppenhaltige Monomere. Es ist insbesondere vorteilhaft, wenn das Polyacrylat einpolymerisierte Acrylsäure und/oder Methacrylsäure aufweist.

Weitere Monomere, die als Comonomere für das Polyacrylat verwendet werden können, sind zum Beispiel Acrylsäure- und/oder Methacrylsäureester mit bis zu 30 C-Atomen, Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und 1 oder 2 Doppelbindungen oder Mischungen dieser Monomeren.

Bevorzugt wird ein Polyacrylat eingesetzt, das auf die folgende Monomerzusammensetzung zurückgeführt werden kann:

a) Acrylsäureester und/oder Methacrylsäureester der folgenden Formel

$$CH_2=C(R^1)(COOR^2)$$

wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt,
b) olefinisch ungesättigte Monomere mit funktionellen Gruppen der für eine Reaktivität mit Epoxidgruppen bereits definierten Art,
c) optional weitere Acrylate und/oder Methacrylate und/oder olefinisch ungesättigte Monomere, die mit der Komponente (a) copolymerisierbar sind.

Weiter vorzugsweise werden zur Anwendung des Polyacrylats als Haftkleber die Anteile der entsprechenden Komponenten (a), (b), und (c) derart gewählt, dass das Polymerisationsprodukt insbesondere eine Glastemperatur kleiner gleich 15 °C (ermittelt mit DSC (Differential Scanning Calorimetry) gemäß DIN 53 765 bei einer Aufheizrate von 10 K/min) aufweist.

Es ist zur Herstellung von Haftklebemassen sehr vorteilhaft, die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% zu wählen (die Angaben sind bezogen auf die Monomermischung für das "Basispolymer", also ohne Zusätze eventueller Additive zu dem fertigen Polymer wie Harze).

Die Monomere der Komponente (a) sind insbesondere weichmachende und/oder unpolare Monomere. Vorzugsweise werden für die Monomere (a) Acrylmonomere eingesetzt, die Acryl- und Methacrylsäureester mit Alkylgruppen, bestehend aus 4 bis 18 C-Atomen, bevorzugt 4 bis 9 C-Atomen, umfassen. Beispiele für derartige Monomere sind n-Butylacrylat, n-Butylmethacrylat, n-Pentylacrylat, n-Pentylmethacrylat, n-Amylacrylat, n-Hexylacrylat, Hexylmethacrylat, n-Heptylacrylat, n-Octylacrylat, n-Octylmethacrylat, n-Nonylacrylat, Isobutylacrylat, Isooctylacrylat, Isooctylmethacrylat und deren verzweigten Isomere wie zum Beispiel 2-Ethylhexylacrylat oder 2-Ethylhexylmethacrylat.

Bevorzugt werden für die Komponente (b) Monomere mit solchen funktionellen Gruppen eingesetzt, die aus der folgenden Aufzählung ausgewählt sind:
Hydroxy-, Carboxy-, Sulfonsäure- oder Phosphonsäuregruppen, Säureanhydride, Epoxide, Amine.

Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Itasconsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Beispielhaft genannte Monomere für die Komponente (c) sind: Methylacrylat, Ethylacrylat, Propylacrylat, Methylmethacrylat, Ethylmethacrylat, Benzylacrylat, Benzylmethacrylat, sek.-Butylacrylat, tert. Butylacrylat, Phenylacrylat, Phenylmethacrylat, Isobornylacrylat, Isobornylmethacrylat, t-Butylphenylacrylat, t-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethylacrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, N-(1-Methyl-undecyl)acrylamid, N-(n-Butoxymethyl)acrylamid, N-(Butoxymethyl)methacrylamid, N-(Ethoxymethyl)acrylamid, N-(n-Octadecyl)acrylamid, weiterhin N,N-Dialkyl-substituierte Amide wie beispielsweise N,N-Dimethylacrylamid, N,N-Dimethylmethacrylamid, N- Benzylacrylamide, N-Isopropylacrylamid, N- tert. Butylacrylamid, N-tert. Octylacrylamid, N-Methylolacrylamid, N-Methylolmethacrylamid, Acrylnitril, Methacrylnitril, Vinylether wie Vinylmethylether, Ethylvinylether, Vinylisobutylether, Vinylester wie Vinylacetat, Vinylchlorid, Vinylhalogenide, Vinylidenchlorid, Vinylidenhalogenide, Vinylpyridin, 4-Vinylpyridin, N-Vinylphthalimid, N-Vinyllactam, N-Vinylpyrrolidon, Styrol, α- und p-Methylstyrol, α-Butylstyrol, 4-n-Butylstyrol, 4-n-Decylstyrol, 3,4 Dimethoxystyrol, Makromonomere wie 2-Polystyrolethylmethacrylat (Molekulargewicht $M_w$ von 4000 bis 13000 g/mol), Poly(Methylmethacrylat)ethylmethacrylat ($M_w$ von 2000 bis 8000 g/mol).

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen sind, zum Beispiel Tetrahydrofufurylacrylat, N-tert-Butylacrylamid, Allylacrylat wobei diese Aufzählung nicht abschließend ist.

Weiterhin sind Gegenstand der Zusammensetzung der Haftklebemasse Vernetzer auf Epoxid-Basis. Als epoxidgruppenhaltige Substanzen werden insbesondere multifunktionelle Epoxide eingesetzt, also solche, die mindestens zwei Epoxideinheiten pro Molekül aufweisen (also mindestens bifunktional sind). Dies können sowohl aromatische als auch aliphatische Verbindungen sein.

Die Mischung aus Acrylaten kann ihrerseits weiter vorzugsweise die folgende Zusammensetzung aufweisen:

(a) 90 bis 99 Gew.-% n-Butylacrylat und/oder 2-Ethylhexylacrylat
(b) 1 bis 10 Gew.-% eines ethylenisch ungesättigten Monomers mit einer Säure- oder Säureanhydridfunktion

Bevorzugt bildet das Monomer (a) eine Mischung aus 2-Ethylhexylacrylat und n-Butylacrylat, weiter vorzugsweise zu gleichen Teilen.

Als Monomer (b) kommen vorteilhaft in Betracht zum Beispiel Acrylsäure, Methacrylsäure, Itaconsäure, Maleinsäure, Fumarsäure und/oder Maleinsäureanhydrid.

Bevorzugt sind Acrylsäure oder Methacrylsäure, gegebenenfalls die Mischung aus beiden.

Zur Erzielung haftklebriger Eigenschaften sollte sich die Klebmasse bei der Verarbeitungstemperatur oberhalb ihrer Glastemperatur befinden, um viskoelastische Eigenschaften zu haben. Die Glasübergangstemperatur der Haftklebemasseformulierung (Polymer-Klebrigmachermischung) liegt daher bevorzugt unterhalb von +15 °C (ermittelt mit DSC (Differential Scanning Calorimetry) gemäß DIN 53 765 bei einer Aufheizrate von 10 K/min).

Die Glasübergangstemperatur der Acrylatcopolymere lässt sich gemäß der Gleichung von Fox aus den Glasübergangstemperaturen der Homopolymere und ihren relativen Mengenverhältnissen abschätzen).

Zur Erzielung von Polymeren, beispielsweise Haftklebemassen oder Heißsiegelmassen, mit gewünschten Glasübergangstemperaturen wird die mengenmäßige Zusammensetzung der Monomermischung vorteilhaft derart gewählt, dass sich nach einer Gleichung (G1) in Analogie zur *Fox*-Gleichung (vergleiche T.G. Fox, Bull. Am. Phys. Soc. 1956, 1, 123) der gewünschte $T_G$-Wert für das Polymer ergibt.

$$\frac{1}{T_G} = \sum_n \frac{w_n}{T_{G,n}} \qquad (G1)$$

n = Laufzahl über die eingesetzten Monomere,

$w_n$ = Massenanteil des jeweiligen Monomers n (Gew.-%) und

$T_{G,n}$ = jeweilige Glasübergangstemperatur des Homopolymers aus den jeweiligen Monomeren n in K.

Analog kann die Gleichung G1 auch zur Bestimmung und Vorhersage der Glasübergangstemperatur von Polymergemischen angewendet werden. Dann gilt, sofern es sich um homogene Mischungen handelt,

n = Laufzahl über die eingesetzten Polymere,

$w_n$ = Massenanteil des jeweiligen Polymeren n (Gew.-%) und

$T_{G,n}$ = jeweilige Glasübergangstemperatur des Polymeren n in K.

Durch den eventuellen Zusatz von Klebrigmachern erhöht sich die Glasübergangstemperatur zwangsläufig, je nach Zugabemenge, Verträglichkeit und Erweichungstemperatur um ca. 5 bis 40 K.

Es sind daher Acrylatcopolymere mit einer Glasübergangstemperatur von höchstens 0 °C bevorzugt.

Weiter vorzugsweise ist der Klebemasse eine zweite, mit der Polyacrylat-Komponente im Wesentlichen nicht mischbare Polymerkomponente auf Elastomerbasis, insbesondere eines Synthesekautschuks (im Folgenden Elastomer-Komponente genannt) zugemischt.

Vorzugsweise umfasst die Klebemasse zumindest die folgenden beiden Komponenten:

- zu 60 Gew.-% bis 90 Gew.-%, bevorzugt 65 Gew.-% bis 80 Gew.-% an der Klebemasse eine erste Polymerkomponente auf Polyacrylatbasis
- zu 10 Gew.-% bis 40 Gew.-%, bevorzugt 15 Gew.-% bis 30 Gew.-% an der Klebemasse eine zweite, mit der Polyacrylat-Komponente im Wesentlichen nicht mischbare Polymerkomponente auf Elastomerbasis, insbesondere eines Synthesekautschuks (im folgenden Elastomer-Komponente genannt).

Die vorstehenden Gewichtsprozentangaben beziehen sich auf die Summe von Polyacrylatkomponente und Elastomerkomponente als 100 Gew.-%.

Die zweite Polymerkomponente ist erfindungsgemäß mit der ersten Polymerkomponente im Wesentlichen nicht mischbar, so dass die Klebemasse in der Klebemassenschicht in zumindest zwei separaten Phasen vorliegt. Insbesondere bildet die eine Phase eine Matrix und die andere Phase eine Vielzahl in der Matrix angeordneter Domänen aus.

Homogene Gemische sind auf molekularer Ebene vermischte Stoffe, homogene Systeme dementsprechend einphasige Systeme. Die zugrunde liegenden Stoffe werden im Rahmen dieser Schrift in synonymer Weise als miteinander "homogen vermischbar", "verträglich" und "kompatibel" bezeichnet. Dementsprechend sind zwei oder mehr Komponenten synonym "nicht homogen vermischbar", "nicht verträglich" und "nicht kompatibel", wenn sie nach inniger Vermengung kein homogenes System, sondern zumindest zwei Phasen ausbilden. Als synonym "teilweise homogen mischbar", "teilweise verträglich", "teilverträglich" und "teilweise kompatibel" werden Komponenten angesehen, die bei inniger Vermengung miteinander (zum Beispiel durch Scherung, in der Schmelze oder in Lösung und anschließendem Eliminieren des Lösungsmittels) zumindest zwei Phasen ausbilden, die jeweils reich an einer der Komponenten sind, wobei aber eine oder beide der Phasen jeweils einen mehr oder weniger großen Teil der anderen Komponenten homogen eingemischt aufweisen kann.

Die Polyacrylat-Komponente stellt für sich bevorzugt eine homogene Phasen dar. Die Elastomer-Komponente kann in sich homogen vorliegen, oder in sich selbst Mehrphasigkeit aufweisen, wie es von mikrophasenseparierenden Blockcopolymeren bekannt ist. Polyacrylat- und Elastomer-Komponente sind vorliegend so gewählt, dass sie - nach inniger Vermengung - bei 23 °C (also der üblichen Anwendungstemperatur für Klebemassen) im Wesentlichen nicht mischbar sind. "Im Wesentlichen nicht mischbar" bedeutet, dass die Komponenten entweder gar nicht homogen miteinander mischbar sind, so dass keine der Phasen einen Anteil der zweiten Komponente homogen eingemischt aufweist, oder dass die Komponenten nur so wenig teilverträglich sind - dass also eine oder beide Komponenten nur einen so geringen Anteil der jeweils anderen Komponente homogen aufnehmen kann -, dass die Teilverträglichkeit für die Erfindung unwesentlich ist, also die erfindungsgemäße Lehre nicht schädlich ist. Die entsprechenden Komponenten werden im Sinne dieser Schrift dann als "im Wesentlichen frei" von der jeweils anderen Komponente angesehen.

Die erfindungsgemäß eingesetzte Klebemasse liegt dementsprechend zumindest bei Raumtemperatur (23 °C), in zumindest zweiphasiger Morphologie vor. Sehr bevorzugt sind die Polyacrylat-Komponente und die Elastomer-Komponente in einem Temperaturbereich von 0 °C bis 50 °C, noch mehr bevorzugt von - 30 °C bis 80 °C im Wesentlichen nicht homogen mischbar.

Komponenten sind im Sinne dieser Schrift insbesondere dann als "im Wesentlichen nicht miteinander mischbar" definiert, wenn sich die Ausbildung zumindest zweier beständiger Phasen physikalisch und/oder chemisch nachweisen lässt, wobei die eine Phase reich an der einen Komponente - der Polyacrylatkomponente - und die zweite Phase reich an der anderen Komponente - der Elastomerkomponente - ist. Ein geeignetes Analysesystem für eine Phasentrennung ist beispielsweise die Raster-Elektronenmikroskopie. Phasenseparation kann sich aber beispielsweise auch dadurch erkennen lassen, dass die unterschiedlichen Phasen zwei voneinander unabhängige Glasübergangstemperaturen bei der dynamischen Differenzkalometrie (DDK) aufweisen. Phasentrennung liegt erfindungsgemäß dann vor, wenn sie sich zumindest durch eine der Analysenmethoden eindeutig zeigen lässt.

Die Phasentrennung kann insbesondere derart realisiert sein, dass es diskrete Bereiche ("Domänen"), die reich an einer Komponente sind (im Wesentlichen aus einer der Komponente gebildet und frei von der anderen Komponente), in einer kontinuierlichen Matrix, die reich an der anderen Komponente ist (im Wesentlichen aus der anderen Komponente gebildet und frei von der ersten Komponente), gibt.

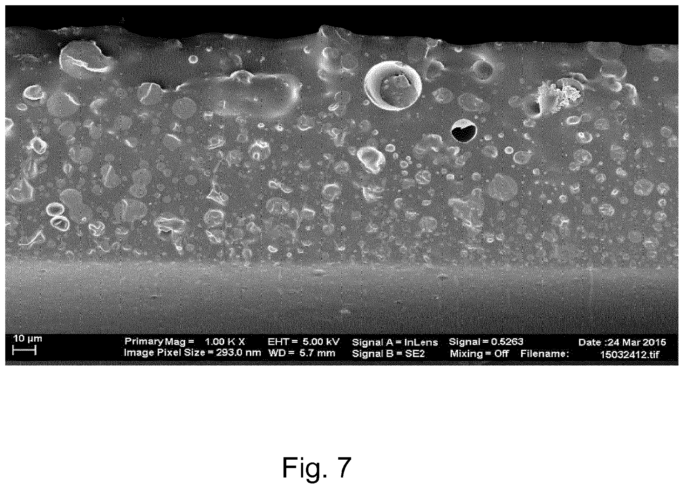

Die Phasentrennung für die erfindungsgemäß eingesetzten Klebemassen findet insbesondere derart statt, dass die Elastomer-Komponente dispergiert in einer kontinuierlichen Matrix der Polyacrylat-Komponente vorliegt (siehe Figur 7). Die durch die Elastomer-Komponente gebildeten Bereiche (Domänen) liegen bevorzugt im Wesentlichen kugelförmig vor. Die durch die Elastomer-Komponente gebildeten Bereiche (Domänen) können auch von der Kugelform abweichen, insbesondere verzerrt wie zum Beispiel in Beschichtungsrichtung elongiert und orientiert vorliegen. Die Größe der Elastomer-Domänen liegt in ihrer größten Ausdehnung typischerweise - aber nicht zwingend - zwischen 0,5 $\mu$m und 20 $\mu$m, insbesondere zwischen 1 $\mu$m und 10 $\mu$m. Andere Domänenformen sind ebenfalls möglich, so zum Beispiel schichtförmige oder stäbchenförmige, wobei auch diese in ihrer Gestalt von idealen Strukturen abweichen können und zum Beispiel gebogen oder verzerrt sein können.

Die Polyacrylatkomponente und die Elastomerkomponente bestehen jeweils aus einer Basispolymerkomponente, die ein Homopolymer, ein Copolymer oder eine Mischung aus Polymeren (Homopolymeren und/oder Copolymeren) sein kann, und gegebenenfalls Zusätzen (Cokomponenten, Additiven). Vereinfachend wird die Basispolymerkomponente im Folgenden als "Basispolymer" bezeichnet, ohne dass hierdurch Polymermischungen für die jeweilige Basispolymerkomponente ausgenommen werden sollen; entsprechend wird unter "Polyacrylat-Basispolymer" die Basispolymerkomponente der Polyacrylat-Komponente und unter "Elastomer-Basispolymer" die Basispolymerkomponente der Elastomer-Komponente der Klebmasse verstanden.

Die Polyacrylatkomponente und/oder die Elastomerkomponente können jeweils als 100-%-Systeme, das heißt ausschließlich auf ihre jeweilige Basispolymerkomponente beruhend und ohne weitere Beimischung von Harzen, Additiven oder dergleichen, vorliegen. In weiterer bevorzugter Weise sind einer oder beider dieser beiden Komponenten neben der Basispolymerkomponente weitere Komponenten beigemischt wie beispielweise Harze.

In einer vorteilhaften Ausführung der Erfindung sind die Polyacrylat-Komponente und die Elastomer-Komponente ausschließlich aus ihrer jeweiligen Basispolymerkomponente zusammengesetzt, so dass keine weiteren polymeren Komponenten vorhanden sind, insbesondere keine Harze anwesend sind. In einer Weiterentwicklung umfasst die gesamte Klebemasse außer den beiden Basispolymerkomponenten keine weiteren Bestandteile.

Der polyacrylatbasierenden Klebemasse beziehungsweise der Polyacrylat-Komponente sind insbesondere vorteilhaft ein oder mehrere Vernetzer für eine chemischen und/oder eine physikalische Vernetzung zugemischt. Da prinzipiell auch strahlenchemische Vernetzung der Polyacrylatkomponente möglich ist, sind Vernetzer aber nicht zwingend vorhanden.

Vernetzer sind solche - insbesondere bi- oder polyfunktionelle, meist niedermolekulare - Verbindungen, die unter den gewählten Vernetzungsbedingungen mit geeigneten - insbesondere funktionellen - Gruppen der zu vernetzenden Polymere reagieren können, somit zwei oder mehrere Polymere oder Polymerstellen miteinander verknüpfen ("Brücken" bilden) und somit ein Netzwerk aus dem zu vernetzenden Polymer beziehungsweise den zu vernetzenden Polymeren schaffen. Hierdurch kommt es in der Regel zur Kohäsionserhöhung. Der Vernetzungsgrad hängt von der Zahl der gebildeten Brücken ab.

Als Vernetzer sind vorliegend prinzipiell alle dem Fachmann bekannten Vernetzer-Systeme für die Ausbildung insbesondere kovalenter, koordinativer oder assoziativer Bindungssysteme mit entsprechend ausgestatteten (Meth)acrylat-Monomeren geeignet, je nach Natur der gewählten Polymere und ihrer funktionellen Gruppen. Beispiele für chemische Vernetzungssysteme sind di- oder mehrfachfunktionale Isocyanate oder di- oder mehrfachfunktionale Epoxide oder di- oder mehrfachfunktionale Hydroxide oder di- oder mehrfachfunktionale Amine oder di- oder mehrfachfunktionale Säureanhydride. Kombinationen verschiedener Vernetzer sind ebenso denkbar.

Als weitere geeignete Vernetzer seien Chelat-Bildner genannt, die in Kombination mit Säurefunktionalitäten in Polymerketten Komplexe bilden, die als Vernetzungspunkte wirken.

Zur effektiven Vernetzung ist es insbesondere von Vorteil, wenn zumindest ein Teil der Polyacrylate funktionelle Gruppen aufweisen, mit denen die jeweiligen Vernetzer zur Reaktion kommen können. Bevorzugt werden hierfür Monomere mit funktionellen Gruppen eingesetzt, die ausgewählt sind aus der Gruppe umfassend: Hydroxy-, Carboxy-, Sulfonsäure- oder Phosphonsäuregruppen, Säureanhydride, Epoxide, Amine. Besonders bevorzugte Beispiele für Monomere für Polyacrylate sind Acrylsäure, Methacrylsäure, Itaconsäure, Maleinsäure, Fumarsäure, Crotonsäure, Aconitsäure, Dimethylacrylsäure, $\beta$-Acryloyloxypropionsäure, Trichloracrylsäure, Vinylessigsäure, Vinylphosphonsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Als besonders vorteilhaft hat es sich erwiesen, als Vernetzer 0,03 bis 0,2 Gewichtsteile, insbesondere 0,04 bis 0,15 Gewichtsteile N,N,N',N'-tetrakis(2,3-epoxypropyl)-m-xylen-a,a'-diamin (Tetraglycidyl-meta-Xylendiamin; CAS 63738-22-7), bezogen auf 100 Gewichtsteile Polyacrylat-Basispolymer, einzusetzen.

Alternativ oder zusätzlich kann es vorteilhaft sein, die Klebemasse strahlenchemisch zu vernetzen. Hierzu bieten sich als Strahlung ultraviolettes Licht (vor allem, wenn der Formulierung geeignete Photoinitiatoren zugesetzt sind oder zumindest ein Polymer in der Acrylatkomponente Comonomere mit Einheiten photoinitiierender Funktionalität enthält) und/oder Elektronenstrahlen an.

Für die strahleninduzierte Vernetzung kann es von Vorteil sein, wenn ein Teil der eingesetzten Monomere funktionelle Gruppen enthalten, die eine nachfolgende strahlenchemische Vernetzung unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, N-*tert*-Butylacrylamid und Allylacrylat.

Für die chemische und/oder physikalische und/oder strahleninduzierte Vernetzung wird insbesondere auf den einschlägigen Stand der Technik verwiesen.

Zur Erzielung gewünschter Eigenschaften der Haftklebemasse, beispielsweise um eine hinreichende Kohäsion der Haftklebemassen zu erreichen, werden die Haftklebemassen in der Regel vernetzt, das heißt, die einzelnen Makromoleküle werden durch Brückenbindungen miteinander verknüpft. Die Vernetzung kann auf unterschiedliche Weisen geschehen, so gibt es physikalische, chemische oder thermische Vernetzungsmethoden.

Als Vernetzung von Polymeren wird insbesondere eine Reaktion bezeichnet, bei der viele zunächst lineare oder verzweigte Makromoleküle durch Brückenbildung zwischen den einzelnen Makromolekülen zu einem mehr oder weniger verzweigten Netzwerk verknüpft werden. Die Brückenbildung erfolgt dabei insbesondere, indem geeignete chemische Moleküle - sogenannte Vernetzer oder Vernetzersubstanzen - mit den Makromolekülen reagieren, zum Beispiel mit bestimmten funktionellen Gruppen der Makromoleküle, die für das jeweilige Vernetzermolekül besonders angreifbar sind. Die Stellen des Vernetzermoleküls, die an den Makromolekülen angreifen, werden in der Regel als "reaktive Zentren" bezeichnet. Vernetzermoleküle können zwei Makromoleküle miteinander verknüpfen - indem ein- und dasselbe Vernetzermolekül mit zwei unterschiedlichen Makromolekülen reagiert, also insbesondere mindestens zwei reaktive Zentren besitzt -, oder Vernetzermoleküle können auch mehr als zwei reaktive Zentren aufweisen, so dass ein einziges Vernetzermolekül dann auch drei oder mehr Makromoleküle miteinander verknüpfen kann. Als Nebenreaktion kann es zu intramolekularen Reaktionen kommen, wenn ein- und dasselbe Vernetzermolekül mit mindestens zwei seiner reaktiven Zentren an ein- und demselben Makromolekül angreift. Im Sinne einer effektiven Vernetzung des Polymers sind solche Nebenreaktionen in der Regel unerwünscht.

Es kann unterschieden werden zwischen verschiedenen Typen von Vernetzern, nämlich 1.) kovalenten Vernetzern, nämlich solchen, die an den zu verknüpfenden Makromolekülen kovalent angreifen und somit eine kovalente chemische Bindung zwischen ihrem entsprechenden reaktiven Zentrum und der Angriffsstelle - insbesondere derfunktionellen Gruppe - am Makromolekül ausbilden. Grundsätzlich kommen hierfür alle denkbaren kovalente Bindungen ausbildenden chemischen Reaktionen in Frage. 2.) koordinativen Vernetzern, nämlich solchen, die an den zu verknüpfenden Makromolekülen koordinativ angreifen und somit eine koordinative Bindung zwischen ihrem entsprechenden reaktiven Zentrum und der Angriffsstelle - insbesondere der funktionellen Gruppe - am Makromolekül ausbilden. Grundsätzlich kommen hierfür alle denkbaren koordinative Bindungen ausbildenden chemischen Reaktionen in Frage.

Die Klebemasse der Schicht A ist gemäß einer bevorzugten Ausführungsform der Erfindung eine vernetzbare Klebemasse, die insbesondere besteht aus

(a) zumindest einer ersten Basiskomponente mit

(a1) als erster Polymerkomponente eine Basispolymerkomponente (im Folgenden auch kurz als Basispolymer bezeichnet) aus einem Homopolymer, einem Copolymer oder einer homogenen Mischung aus mehreren Homopolymeren, mehreren Copolymeren oder einem oder mehreren Homopolymeren mit einem oder mehreren Copolymeren, wobei zumindest eines der Homopolymere oder zumindest eines der Copolymere, insbesondere alle der Polymere der Basispolymerkomponente für die Vernetzung funktionelle Gruppen aufweisen,
(a2) gegebenenfalls weitere mit der Basispolymerkomponente homogen mischbare oder in diesem lösliche Bestandteile, wie Harze oder Additive, Monomerreste, kurzkettige Polymerisationsprodukte (Nebenprodukte), Verunreinigungen etc.;

(b) optional einer zweiten Komponente mit

(b1) als weitere Polymerkomponente mit dem Basispolymer im Wesentlichen nicht homogen mischbare Polymere, insbesondere solche ohne vernetzungsfähige Gruppen,

(b2) gegebenenfalls weitere mit dem Basispolymer im Wesentlichen nicht homogen mischbare und in diesem nicht lösliche Bestandteile, wie bestimmte Harze oder Additive, wobei die Komponente (f) insbesondere ganz oder teilweise mit der optional vorhandenen weiteren Polymerkomponente (b) homogen mischbar ist;

(c) Vernetzern, nämlich

(c1) zumindest einen kovalenten Vernetzer,
(c2) zumindest einen koordinativen Vernetzer,
und

(d) gegebenenfalls Lösemittel oder Lösemittelreste.

Als Polymere für die Basispolymerkomponente (a1) für die vorliegende Erfindung kommen insbesondere solche Polymere und Polymermischungen in Frage, die sich durch sowohl durch kovalente als auch durch koordinative Vernetzer vernetzen lassen. Dies sind insbesondere Polymere, die für die Vernetzung freie Säuregruppen aufweisen.

Als bevorzugte Basispolymere lassen sich dabei Acrylat-Copolymere einsetzen, insbesondere solche Polymere (Copolymere, Polymermischungen), die zu mindestens 50 Gew.-% auf Acrylmonomere zurückzuführen sind. Als Comonomere für die Einführung der vernetzungsfähigen Gruppen werden dabei freie Säuregruppen aufweisende copolymerisierbare Monomere gewählt, besonders bevorzugt wird Acrylsäure eingesetzt. Säuregruppen enthaltende Monomere, wie beispielsweise Acrylsäure, haben die Eigenschaft, die haftklebrigen Eigenschaften der Haftklebemasse zu beeinflussen. Wird Acrylsäure verwendet, wird diese bevorzugt in einem Anteil von bis zu maximal 12,5 Gew.-%, bezogen auf die Gesamtheit der Monomere der Basispolymerkomponente, verwendet. Dabei wird - in Abhängigkeit der jeweils eingesetzten Vernetzermengen - bevorzugt zumindest so viel Acrylsäure einpolymerisiert, dass genug Säuregruppen zugegen sind, dass es zu einer im Wesentlichen vollständigen Umsetzung der Vernetzer kommen kann.

Homogene Gemische sind auf molekularer Ebene vermischte Stoffe, homogene Systeme dementsprechend einphasige Systeme. Die zugrunde liegenden Stoffe werden im Rahmen dieser Schrift in synonymer Weise als miteinander "homogen vermischbar", "verträglich" und "kompatibel" bezeichnet. Dementsprechend sind zwei oder mehr Komponenten synonym "nicht homogen vermischbar", "nicht verträglich" und "nicht kompatibel", wenn sie nach inniger Vermengung kein homogenes System, sondern zumindest zwei Phasen ausbilden. Als synonym "teilweise homogen mischbar", "teilweise verträglich", "teilverträglich" und "teilweise kompatibel" werden Komponenten angesehen, die bei inniger Vermengung miteinander (zum Beispiel durch Scherung, in der Schmelze oder in Lösung und anschließendem Eliminieren des Lösungsmittels) zumindest zwei Phasen ausbilden, die jeweils reich an einer der Komponenten sind, wobei aber eine oder beide der Phasen jeweils einen mehr oder weniger großen Teil der anderen Komponenten homogen eingemischt aufweisen kann.

Die Polyacrylat-Komponente (a) der vorteilhaften Haftklebemasse der Schicht A stellt für sich bevorzugt eine homogene Phase dar. Die Elastomer-Komponente (b) kann in sich homogen vorliegen oder in sich selbst Mehrphasigkeit aufweisen, wie es von mikrophasenseparierenden Blockcopolymeren bekannt ist. Polyacrylat- und Elastomer-Komponente sind vorliegend so gewählt, dass sie - nach inniger Vermengung - bei 23 °C (also der üblichen Anwendungstem-peratur für Klebmassen) im Wesentlichen nicht mischbar sind. "Im Wesentlichen nicht mischbar" bedeutet, dass die Komponenten entweder gar nicht homogen miteinander mischbar sind, so dass keine der Phasen einen Anteil der zweiten Komponente homogen eingemischt aufweist, oder dass die Komponenten nur so wenig teilverträglich sind - dass also eine oder beide Komponenten nur einen so geringen Anteil der jeweils anderen Komponente homogen aufnehmen kann - , dass die Teilverträglichkeit für die Erfindung unwesentlich ist, also die erfindungsgemäße Lehre nicht schädlich ist. Die entsprechenden Komponenten werden im Sinne dieser Schrift dann als "im Wesentlichen frei" von der jeweils anderen Komponente angesehen.

Die vorteilhafte erfindungsgemäße Klebemasse liegt dementsprechend zumindest bei Raumtemperatur (23 °C), in zumindest zweiphasiger Morphologie vor. Sehr bevorzugt sind die Polyacrylat-Komponente und die Elastomer-Komponente in einem Temperaturbereich von 0 °C bis 50 °C, noch mehr bevorzugt von - 30 °C bis 80 °C im Wesentlichen nicht homogen mischbar.

Komponenten sind im Sinne dieser Schrift insbesondere dann als "im Wesentlichen nicht miteinander mischbar" definiert, wenn sich die Ausbildung zumindest zweier beständiger Phasen physikalisch und/oder chemisch nachweisen lässt, wobei die eine Phase reich an der einen Komponente - der Polyacrylat-Komponente - und die zweite Phase reich an der anderen Komponente - der Elastomer-Komponente - ist. Ein geeignetes Analysesystem für eine Phasentrennung ist beispielsweise die Raster-Elektronenmikroskopie. Phasenseparation kann sich aber beispielsweise auch dadurch er-kennen lassen, dass die unterschiedlichen Phasen zwei voneinander unabhängige Glasübergangstemperaturen bei der dynamischen Differenzkalometrie (DDK) aufweisen. Phasentrennung liegt erfindungsgemäß dann vor, wenn sie sich zumindest durch eine der Analysenmethoden eindeutig zeigen lässt.

Die Phasentrennung kann insbesondere derart realisiert sein, dass es diskrete Bereiche ("Domänen"), die reich an einer Komponente sind (im Wesentlichen aus einer der Komponente gebildet und frei von der anderen Komponente), in einer kontinuierlichen Matrix, die reich an der anderen Komponente ist (im Wesentlichen aus der anderen Komponente gebildet und frei von der ersten Komponente), gibt.

Die Phasentrennung für die erfindungsgemäß eingesetzten Klebemassen findet insbesondere derart statt, dass die Elastomer-Komponente dispergiert in einer kontinuierlichen Matrix der Polyacrylat-Komponente vorliegt. Die durch die Elastomer-Komponente gebildeten Bereiche (Domänen) liegen bevorzugt im Wesentlichen kugelförmig vor. Die durch die Elastomer-Komponente gebildeten Bereiche (Domänen) können auch von der Kugelform abweichen, insbesondere verzerrt wie zum Beispiel in Beschichtungsrichtung elongiert und orientiert vorliegen. Die Größe der Elastomer-Domänen liegt in ihrer größten Ausdehnung typischerweise - aber nicht zwingend - zwischen 0,5 $\mu$m und 20 $\mu$m, insbesondere zwischen 1 $\mu$m und 10 $\mu$m. Andere Domänenformen sind ebenfalls möglich, so zum Beispiel schichtförmige oder stäbchenförmige, wobei auch diese in ihrer Gestalt von idealen Strukturen abweichen können und zum Beispiel gebogen oder verzerrt sein können.

Die Polyacrylat-Komponente und/oder die Elastomer-Komponente können jeweils als 100-%-Systeme, das heißt ausschließlich auf ihre jeweilige Polymerkomponente ((a1) beziehungsweise (b1)) beruhend und ohne weitere Beimischung von Harzen, Additiven oder dergleichen, vorliegen. In weiterer bevorzugter Weise sind einer oder beider dieser beiden Komponenten neben der Basispolymerkomponente weitere Komponenten beigemischt, wie beispielweise Harze.

In einer vorteilhaften Ausführung der Erfindung sind die Polyacrylat-Komponente und die Elastomer-Komponente ausschließlich aus ihrer jeweiligen Polymerkomponente ((a1) beziehungsweise (b1)) zusammengesetzt, so dass keine weiteren polymeren Komponenten vorhanden sind, insbesondere keine Harze anwesend sind. In einer Weiterentwicklung umfasst die gesamte Klebemasse außer den beiden Polymerkomponenten (a1) und (b1) keine weiteren Bestandteile.

Die Polyacrylat-Komponente (a) der vorteilhaften erfindungsgemäßen Klebemasse umfasst insbesondere eines oder mehrere Polymere auf Polyacrylatbasis, die die Basispolymerkomponente (a1) darstellen.

Polymere auf Polyacrylatbasis sind insbesondere solche Polymere, die zumindest überwiegend - insbesondere zu mehr als 60 Gew.-% - auf Acrylsäureestern und/oder Methacrylsäure, sowie gegebenenfalls deren freien Säuren, als Monomere (im Folgenden als "Acrylmonomere" bezeichnet) zurückzuführen sind. Polyacrylate sind bevorzugt durch freie radikalische Polymerisation erhältlich. Polyacrylate können gegebenenfalls weitere Bausteine auf Basis weiterer, nicht-acrylischer copolymerisierbarer Monomer enthalten. Bei den Polyacrylaten kann es sich um Homopolymere und/oder insbesondere um Copolymere handeln. Die Bezeichnung "Copolymer" umfasst im Sinne dieser Erfindung sowohl solche Copolymere, in denen die bei der Polymerisation eingesetzten Comonomere rein statistisch eingebaut sind, als auch solche, bei denen Gradienten in der Comonomerzusammensetzung und/oder lokale Anreicherungen einzelner Comonomersorten sowie ganze Blöcke eines Monomers in den Polymerketten vorkommen. Auch alternierende Comonomerabfolgen sind denkbar.

Die Polyacrylate können beispielsweise von linearer, verzweigter, sternförmiger oder gepfropfter Struktur sein, und es kann sich um Homopolymere oder Copolymere handeln. Vorteilhaft liegt die mittlere Molmasse (Gewichtsmittel $M_W$) zumindest eines der Polyacrylate des Polyacrylat-Basispolymers, bei mehreren vorhandenen Polyacrylaten vorteilhaft des überwiegenden Gewichtsteils der Polyacrylate, insbesondere aller vorhandenen Poylacrylate im Bereich von 250 000 g/mol bis 10 000 000 g/mol, bevorzugt im Bereich von 500 000 g/mol bis 5 000 000 g/mol.

In sehr bevorzugter Vorgehensweise sind die Vernetzer der Komponente (c) in die Basiskomponente homogen einmischbar, gegebenenfalls nach vorheriger Lösung in geeigneten Lösemitteln.

Als kovalente Vernetzer (Komponente (c1)) für die vorliegende Erfindung werden in einer bevorzugten Ausführung der Erfindung Glycidylamine eingesetzt. Als erfindungsgemäß besonders bevorzugte Vertreter seien exemplarisch N,N,N',N'-Tetrakis(2,3-epoxypropyl)cyclohexane-1,3-dimethylamine und N,N,N',N'-tetrakis(2,3-epoxypropyl)-m-xylen-a,a'-diamin genannt.

Vorteilhaft können weiterhin mehrfachfunktionelle Epoxide, insbesondere Epoxycyclohexylcarboxylate als kovalente Vernetzer eingesetzt werden. Insbesondere 2,2-Bis(hydroxymethyl)-1,3-propanediol oder (3,4-Epoxycyclohexan)methyl-3,4-epoxycyclohexylcarboxylat seinen hier exemplarisch genannt.

Weiterhin können erfindungsgemäß multifunktionelle Azeridine eingesetzt. Hierzu sei beispielsweise Trimethylolpropane tris(2-methyl-1-aziridinepropionate) genannt.

Als kovalente Vernetzer werden in einer weiteren bevorzugten Ausführung der Erfindung Isocyanate eingesetzt, insbesondere multifunktionelle Isocyanatverbindungen. Als multifunktionelle Isocyanatverbindung können beispielsweise Tolylendiisocyanat (TDI), 2,4-Tolylendiisocyanatdimer, Naphthylen-1,5-diisocyanat (NDI), o-Tolylendiisocyanat (TODI), Diphenylmethandiisocyanat (MDI), Triphenylmethantriisocyanat, Tris-(p-isocyanatphenyl)thiophos-phit, Polymethylenpolyphenylisocyanat eingesetzt werden. Sie können allein oder in einer Kombination von zwei oder mehr Arten davon verwendet werden.

Es wird erfindungsgemäß zumindest ein kovalenter Vernetzer eingesetzt, es können aber auch zwei oder mehrere kovalente Vernetzer zum Einsatz kommen, etwa beispielsweise die zwei vorgenannten Diamin-Verbindungen in Kombination miteinander.

Als koordinative Vernetzer (Komponente (c2)) für die vorliegende Erfindung kommen insbesondere Chelatverbindungen, insbesondere mehrwertige Metallchelatverbindungen in Frage. Unter dem Begriff "mehrwertige Metallchelatverbindung" werden solche Verbindungen verstanden, bei der ein mehrwertiges Metall koordinativ an eine oder mehrere organische Verbindungen gebunden ist. Als mehrwertiges Metallatom können Al(III), Zr(IV), Co(II), Cu(I), Cu(II), Fe(II), Fe(III), Ni(II), V(II), V(III), V(IV), V(V), Zn(II), In(III), Ca(II), Mg(II), Mn(II), Y(III), Ce(II), Ce(IV), St(II), Ba(II), Mo(II), Mo(IV), Mo(VI), La(III), Sn(II) Sn(IV), Ti(IV) und dergleichen eingesetzt werden. Von diesen sind Al(III), Zr(IV) und Ti(IV) bevorzugt.

Als Liganden der koordinativen Vernetzer können grundsätzlich alle bekannten Liganden diesen. Die für die koordinative Bindung der organischen Verbindung genutzten Atome können aber insbesondere solche Atome sein, die feie Elektronenpaare aufweisen, wie beispielsweise Sauerstoffatome, Schwefelatome, Stickstoffatome und dergleichen. Als organische Verbindung können beispielsweise Alkylester, Alkoholverbindungen, Carbonsäureverbindungen, Etherverbindungen, Ketonverbindungen und dergleichen genutzt werden. Insbesondere seien Titanchelatverbindungen wie Titandipropoxidbis(acetylacetonat), Titandibutoxidbis(octylenglycholat), Titandipropoxid-bis(ethylacetoacetat), Titandipropoxidbis(lactat), Titandipropoxidbis(triethanolaminat), Titandi-n-butoxidbis(triethanolaminat), Titantri-n-butoxidmonostearat, Butyltitanatdimer, Poly(titanacetylacetonat) und dergleichen; Aluminiumchelat- Verbindungen wie Aluminiumdiisopropoxidmonoethylacetat, Aluminiumdi-n-butoxidmonomethylacetoacetat, Aluminiumdi-i-butoxidmonomethylacetoacetat, Aluminiumdi-n-butoxidmonoethylacetoacetat, Aluminiumdisec-butoxidmonoethylacetoacetat, Aluminiumtriacetylacetonat, Aluminiumtriethylacetoacetonat, Aluminiummonoacetylacetonatbis(ethylacetoacetonat) und dergleichen und Zirkoniumchelatverbindungen wie Zirkoniumtetraacetylacetonat und dergleichen veranschaulichend aufgeführt. Von diesen sind Aluminiumtriacetylacetonat und Aluminiumdipropoxid bevorzugt. Sie können allein oder in einer Kombination von zwei oder mehr Arten davon verwendet werden.

Kovalente Vernetzer werden bevorzugt in einer Gesamtmenge von 0,015 bis 0,04, bevorzugt 0,02 bis 0,035 Gewichtsteile, bezogen auf 100 Gewichtsteile der Basispolymerkomponente (a1) eingesetzt, sehr bevorzugt in einer Menge von 0,03 Gew.%. Koordinative Vernetzer werden bevorzugt in einer Menge von 0,03 bis 0,15, bevorzugt 0,04 bis 0,1 Gewichtsteile bezogen auf 100 Gewichtsteile der Basispolymerkomponente (a1) eingesetzt.

Weiter vorzugsweise werden kovalente Vernetzer und koordinative Vernetzer derart eingesetzt, dass die koordinativen Vernetzer im molaren Überschuss, bezogen auf die kovalenten Vernetzer, vorliegen. Bevorzugt werden die Vernetzer in den vorstehend genannten Mengen Bereichen eingesetzt, und zwar derart, dass das molare Verhältnis von kovalenten Vernetzern zu koordinativen Vernetzern - also das Verhältnis der eingesetzten Stoffmenge $n_{kov}$ der kovalenten Vernetzer zur eingesetzten Stoffmenge $n_{koord}$ der koordinativen Vernetzer - im Bereich von 1 : 1,3 bis 1 : 4,5 liegt, dementsprechend $1,3 \leq n_{koord}/n_{kov} \leq 4,5$. Sehr bevorzugt ist ein molares Verhältnis von kovalenten Vernetzern zu koordinativen Vernetzern von 1 : 2 bis 1 : 4.

Die mit der Polyacrylat-Komponente im Wesentlichen nicht verträgliche Elastomerkomponente umfasst vorteilhaft einen oder unabhängig voneinander gewählt mehrere Synthesekautschuke als Basispolymerkomponente.

Bevorzugt wird als Synthesekautschuk mindestens ein Vinylaromatenblockcopolymer in Form eines Blockcopolymers mit einem Aufbau A-B, A-B-A, $(A-B)_n$, $(A-B)_nX$ oder $(A-B-A)_nX$, A-B-X(A'-B')$_n$ verwendet, worin

- die Blöcke A beziehungsweise A' unabhängig voneinander für ein Polymer, gebildet durch Polymerisation mindestens eines Vinylaromaten wie beispielweise Styrol oder $\alpha$-Methylstyrol;
- die Blöcke B beziehungsweise B' unabhängig voneinander für ein Polymer, gebildet durch Polymerisation von konjugierten Dienen mit 4 bis 18 C-Atomen und/oder ein Polymer aus einem Isopren, Butadien, einem Farnesen-Isomer oder einem Gemisch aus Butadien und Isopren oder einem Gemisch aus Butadien und Styrol, oder enthaltend vollständig oder teilweise Ethylen, Propylen, Butylen und/oder Isobutylen und/oder für ein teil- oder vollhydriertes Derivat eines solchen Polymers;
- X für den Rest eines Kopplungsreagenzes oder Initiators und
- n für eine ganze Zahl $\geq 2$ stehen.

Insbesondere sind alle Synthesekautschuke Blockcopolymere mit einem Aufbau wie vorstehend dargelegt. Der Synthesekautschuk kann somit auch Gemische verschiedener Blockcopolymere mit einem Aufbau wie vorstehend enthalten.

Geeignete Blockcopolymere (Vinylaromatenblockcopolymere) umfassen also einen oder mehrere gummiartige Blöcke B beziehungsweise B' (Weichblöcke) und einen oder mehrere glasartige Blöcke A beziehungsweise A' (Hartblöcke). Besonders bevorzugt ist ein Blockcopolymer mit einem Aufbau A-B, A-B-A, $(A-B)_3X$ oder $(A-B)_4X$, wobei für A, B und X die vorstehenden Bedeutungen gelten. Ganz besonders bevorzugt sind alle Synthesekautschuke Blockcopolymere mit einem Aufbau A-B, A-B-A, $(A-B)_3X$ oder $(AB)_4X$, wobei für A, B und X die vorstehenden Bedeutungen gelten. Insbesondere ist der Synthesekautschuk ein Gemisch aus Blockcopolymeren mit einem Aufbau A-B, A-B-A, $(AB)_3X$ oder $(A-B)_4X$, das bevorzugt mindestens Diblockcopolymere A-B und/oder Triblockcopolymere A-B-A enthält.

Weiterhin vorteilhaft ist ein Gemisch aus Diblock- und Triblockcopolymeren und (A-B)$_n$- oder (A-B)$_n$X-Block-copolymeren mit n größer gleich 3.

In einigen vorteilhaften Ausführungsformen wird zusätzlich oder ausschließlich ein Blockcopolymer verwendet, welches ein Multiarm-Blockcopolymer ist. Dieses wird durch die allgemeine Formel

$$Q_m\text{-}Y$$

beschrieben, worin Q einen Arm des Multiarm-Blockcopolymers repräsentiert und m wiederum die Anzahl an Armen darstellt, wobei m eine ganze Zahl von mindestens 3 ist. Y ist der Rest eines Multifunktionsverknüpfungsreagenzes, das zum Beispiel einem Kopplungsreagenz oder einem multfunktionalen Initiator entstammt. Insbesondere hat jeder Arm Q unabhängig die Formel A*-B*, wobei A* und B* jeweils unabhängig zu den übrigen Armen entsprechend der vorstehenden Definitionen für A beziehungsweise A' und B beziehungsweise B' gewählt werden, so dass jeweils A* einen glasartigen Block und B* einen Weichblock repräsentiert. Selbstverständlich ist es auch möglich, für mehrere Arme Q oder alle Arme Q identische A* und/oder identische B* zu wählen.

Die Blöcke A, A' und A* werden im Folgenden gemeinsam als A-Blöcke bezeichnet. Die Blöcke B, B' und B* werden im Folgenden entsprechend gemeinsam als B-Blöcke bezeichnet.

A-Blöcke sind generell glasartige Blöcke mit jeweils einer Glasübergangstemperatur, die oberhalb der Raumtemperatur (unter Raumtemperatur sei im Zusammenhang dieser Erfindung 23 °C verstanden) liegt. In einigen vorteilhaften Ausführungsformen liegt die Glasübergangstemperatur des glasartigen Blockes bei mindestens 40 °C, bevorzugt bei mindestens 60 °C, noch bevorzugter bei mindestens 80 °C oder sehr bevorzugt bei mindestens 100 °C.

Das Vinylaromatenblockcopolymer weist weiterhin generell einen oder mehrere gummiartige B-Blöcke mit einer Glasübergangstemperatur von kleiner als Raumtemperatur auf. In einigen Ausführungsformen ist der Tg des Weichblocks kleiner als -30 °C oder sogar kleiner als -60 °C.

Neben den genannten erfindungsgemäßen und besonders bevorzugten Monomeren für die B-Blöcke umfassen weitere vorteilhafte Ausführungsformen ein polymerisiertes konjugiertes Dien, ein hydriertes Derivat eines polymerisierten konjugierten Diens oder eine Kombinationen davon. In einigen Ausführungsformen umfassen die konjugierten Diene 4 bis 18 Kohlenstoffatome.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien und Dimethylbutadien sowie beliebigen Mischungen dieser Monomere. Auch der Block B kann als Homopolymer oder als Copolymer vorliegen.

Beispielhaft seien für weitere vorteilhafte konjugierte Diene für die B-Blöcke zusätzlich Ethylbutadien, Phenylbutadien, Piperylen, Pentadien, Hexadien, Ethylhexadien und Dimethylbutadien genannt, wobei die polymerisierten konjugierten Diene als Homopolymer oder als Copolymer vorliegen können.

Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teil- oder vollhydriertes Derivat eines dieser beiden Polymere wie insbesondere Polybutylenbutadien; oder ein Polymer aus einem Gemisch aus Butadien und Isopren. Ganz besonders bevorzugt ist der Block B ein Polybutadien.

Der Anteil an A-Blöcke bezogen auf die gesamten Blockcopolymere beträgt dabei im Mittel bevorzugt 10 bis 40 Gew.-%, mehr bevorzugt 15 bis 33 Gew.-%.

Bevorzugt als Polymer für A-Blöcke wird Polystyrol. Bevorzugt als Polymere für B-Blöcke wird Polybutadien, Polyisopren, Polyfarnesen und deren teil- oder vollhydrierten Derivate wie Polyethylenbutylen, Polyethylenpropylen, Polyethylenethylenpropylen oder Polybutylenbutadien oder Polyisobutylen. Sehr bevorzugt wird Polybutadien.

Gemische verschiedener Blockcopolymere können zum Einsatz kommen. Bevorzugt werden Triblockcopolymere ABA und/oder Diblockcopolymere AB eingesetzt.

Blockcopolymere können linear, radial oder sternförmig (Multiarm) sein.

Die erfindungsgemäß eingesetzten Klebmassen können insbesondere harzfrei sein, da die Polyacrylat-Komponente häufig bereits selbst typischerweise Haftklebrigkeit aufweist und der haftklebrige Charakter auch dann erhalten bleibt, wenn die Elastomer-Komponente zugegen ist. Trotzdem kann es von Interesse sein, die klebtechnischen Eigenschaften weiter zu verbessern oder auf spezielle Anwendungen hin zu optimieren, daher können den Klebemassen in vorteilhafter Weiterentwicklung der Erfindung Klebharze beigemischt werden.

Der Einsatz von Klebrigmachern, auch als Klebharze bezeichnet, zur Steigerung der Klebkräfte von Haftklebemassen ist grundsätzlich bekannt. Vorzugsweise werden der selbstklebenden Acrylatmasse 15 bis 100 Gewichtsteile Klebrigmacher (bezogen auf die Polymere, also Acrylate plus gegebenenfalls Elastomere wie Synthesekautschuke) hinzugefügt, zumeist 20 bis 80 Gewichtsteile, weiter bevorzugt 30 bis 50 Gewichtsteile.

Unter einem "Klebharz" wird entsprechend dem allgemeinem Fachmannverständnis ein oligomeres oder polymeres Harz verstanden, das die Autoadhäsion (den Tack, die Eigenklebrigkeit) der Haftklebemasse im Vergleich zu der keinen Klebharz enthaltenden, ansonsten aber identischen Haftklebemasse erhöht.

Als Klebrigmacher sind prinzipiell alle bekannten Stoffklassen geeignet. Klebrigmacher sind beispielsweise nicht hydrierte, partiell, selektiv oder vollständig hydrierte Kohlenwasserstoffharze (zum Beispiel Polymere auf Basis ungesättigter $C_5$-, $C_5$-/$C_9$- oder $C_9$-Monomere), Terpenphenolharze, Polyterpenharze auf Basis von Rohstoffen wie zum Beispiel α-, β-Pinen und/oder δ-Limonen, aromatische Harze wie Cumaron-Inden-Harze oder Harze auf Basis Styrol oder α-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit, um nur einige zu nennen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze.

Bevorzugt sind Harze auf Basis von Terpenphenolen und Kolophoniumestern. Ebenfalls bevorzugt sind Klebharze mit einem Erweichungspunkt oberhalb von 80 °C gemäß ASTM E28-99 (2009). Besonders bevorzugt sind Harze auf Basis von Terpenphenolen und Kolophoniumestern mit einem Erweichungspunkt oberhalb von 90 °C gemäß ASTM E28-99 (2009).

Zur weiteren Verbesserung der Eigenschaften kann die Klebmasseformulierung optional mit Lichtschutz- oder primären und/oder sekundären Alterungsschutzmitteln abgemischt sein.

Als Alterungsschutzmittel können Produkte auf Basis sterisch gehinderter Phenole, Phosphite, Thiosynergisten, sterisch gehinderter Amine oder UV-Absorber eingesetzt werden.

Bevorzugt eingesetzt werden primäre Antioxidantien wie zum Beispiel Irganox 1010 oder Irganox 254, allein oder in Kombination mit sekundären Antioxidantien wie zum Beispiel Irgafos TNPP oder Irgafos 168.

Die Alterungsschutzmittel können dabei in beliebiger Kombination miteinander verwendet werden, wobei Mischungen aus primären und sekundären Antioxidantien in Kombination mit Lichtschutzmitteln wie zum Beispiel Tinuvin 213 besonders gute Alterungsschutzwirkung zeigen.

Ganz besonders vorteilhaft haben sich Alterungsschutzmittel erwiesen, in denen ein primäres Antioxidans mit einem sekundären Antioxidans in einem Molekül vereint ist. Bei diesen Alterungsschutzmitteln handelt es sich um Kresolderivate, deren aromatischer Ring an zwei beliebigen unterschiedlichen Stellen, bevorzugt in ortho- und meta-Stellung zur OH-Gruppe mit Thioalkylketten substituiert ist, wobei das Schwefelatom auch über eine oder mehrere Alkylketten an dem aromatischen Ring des Kresolbausteins verbunden sein kann. Die Anzahl der Kohlenstoffatome zwischen dem Aromaten und dem Schwefelatom kann zwischen 1 und 10, bevorzugt zwischen 1 und 4 liegen. Die Anzahl der Kohlenstoffatome der Alkylseitenkette kann zwischen 1 und 25, bevorzugt zwischen 6 und 16 liegen. Besonders bevorzugt sind hierbei Verbindungen des Typs 4,6-Bis(dodecylthiomethyl)-o-cresol, 4,6-Bis(undecylthiomethyl)-o-cresol, 4,6-Bis(decylthiomethyl)-o-cresol 4,6-Bis(nonylthiomethyl)-o-cresol oder 4,6-Bis(octylthiomethyl)-o-cresol. Derartige Alterungsschutzmittel werden zum Beispiel von der Firm Ciba Geigy unter dem Namen Irganox 1726 oder Irganox 1520 angeboten.

Die Menge des zugesetzten Alterungsschutzmittels beziehungsweise Alterungsschutzmittelpaketes sollte in einem Bereich zwischen 0,1 und 10 Gew.-Teilen, bevorzugt in einem Bereich zwischen 0,2 und 5 Gew.-Teilen, besonders bevorzugt in einem Bereich zwischen 0,5 und 3 Gew.-Teilen bezogen auf den Polymergehalt (Acrylate plus gegebenenfalls Elastomere wie Synthesekautschuke) liegen.

Zur Verbesserung der Verarbeitungseigenschaften kann die Formulierung weiterhin mit üblichen Prozesshilfsmitteln wie Rheologieadditiven (Verdicker), Entschäumern, Entlüftern, Netzmitteln oder Verlaufsmitteln abgemischt sein. Geeignete Konzentrationen liegen im Bereich von 0,1 bis zu 5 Gewichtsteilen bezogen auf den Polymergeghalt (Acrylate plus gegebenenfalls Elastomere wie Synthesekautschuke).

Füllstoffe (verstärkend oder nicht verstärkend) wie Siliziumdioxide (sphärisch, nadelförmig, plättchenförmig oder unregelmäßig wie die pyrogenen Silicas), Kalziumcarbonate, Zinkoxide, Titandioxide, Aluminiumoxide oder Aluminiumoxidhydroxide können sowohl der Justierung der Verarbeitbarkeit als auch der klebtechnischen Eigenschaften dienen. Geeignete Konzentrationen liegen im Bereich von 0,1 bis zu 20 Gewichtsteilen bezogen auf den Polymergeghalt (Acrylate plus gegebenenfalls Elastomere wie Synthesekautschuke).

Die selbstklebende Acrylatmasse, die die Schicht A und/oder C und/oder D bildet, umfasst gemäß einer bevorzugten Ausführungsform der Erfindung eine Polymermischung aus Acrylaten und Synthesekautschuken, wobei der Polymermischung ein oder mehrere Vernetzer sowie Klebrigmacher zugemischt sind.

Erfindungsgemäß ist die Schicht A geschäumt.

Bevorzugt wird der Schaum durch das Einbringen und nachfolgende Expandieren von Mikroballons erhalten.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 μm Durchmesser im unexpandierten Zustand) und ihre zur Expansion benötigten Starttemperaturen (75 bis 220 °C) differenzieren. Ein Beispiel für kommerziell erhältliche Mikroballons sind die Expancel® DU-Typen (DU = dry unexpanded) von der Firma Akzo Nobel.

Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung einer geschäumten erfindungsgemäßen Haftklebemasse geeignet.

Eine geschäumte Schicht A kann auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite® oder mit der Typenbezeichnung Expancel xxx DE yy (Dry Expanded) von der Firma Akzo Nobel kommerziell erhältlich."xxx" steht die Zusammensetzung der Mikroballonsabmischung. "yy" steht für die Größe der Mikroballons im expandierten Zustand.

Bei der Verarbeitung von bereits expandierten Mikroballontypen kann es passieren, dass die Mikroballons aufgrund ihrer geringen Dichte in der Polymermatrix, in die diese eingearbeitet werden sollen, zur Flotation neigen, also in der Polymermatrix während des Verarbeitungsprozesses "nach oben" aufschwimmen. Dies führt zu einer ungleichmäßigen Verteilung der Mikroballons in der Schicht. Im oberen Bereich der Schicht (z-Richtung) sind mehr Mikroballons anzutreffen als im unteren Bereich der Schicht, so dass sich ein Dichtegradient über die Schichtdicke einstellt.

Dieser Fall ist in der Figur 7 gezeigt. Hier ist ein Gradient in der Verteilung der Mikroballons zu sehen. Im oberen Bereich der Schaumschicht sind mehr und vor allem weiter expandierte Mikroballons als im unteren Bereich der Schaumschicht.

Um einen solchen Dichtegradienten weitgehend oder nahezu vollständig zu verhindern, werden erfindungsgemäß bevorzugt nicht oder nur wenig vorexpandierte Mikroballons in die Polymermatrix der Schicht A eingearbeitet. Erst nach dem Einarbeiten in die Schicht werden die Mikroballons expandiert.

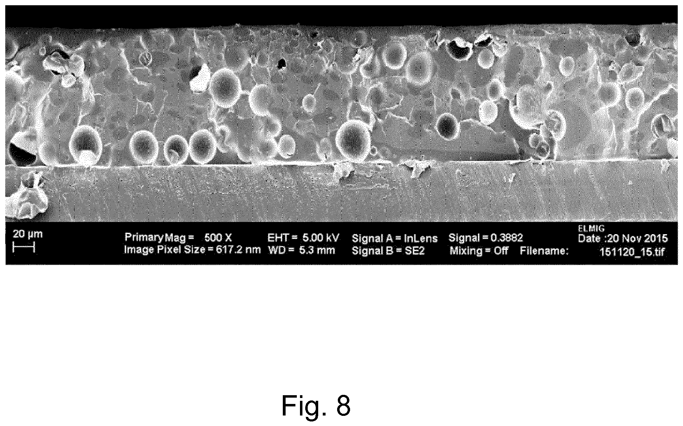

Auf diese Weise ergibt sich eine gleichmäßigere Verteilung der Mikroballons in der Polymermatrix (siehe Figur 8). In der Figur 8 ist zu erkennen, dass sowohl im oberen als auch im unteren Bereich der Schaumschicht gleichweit expandierte Mikroballons vorhanden sind. Auch der Expansionsgrad der Mikroballons ist insgesamt ausgeglichener. Nahezu alle Mikroballons sind gleich expandiert.

Vorzugsweise werden die Mikroballons so gewählt, dass das Verhältnis der Dichte der Polymermatrix zu der Dichte der in die Polymermatrix einzuarbeitenden (nicht oder nur wenig vorexpandierten) Mikroballons zwischen 1 und 1:6, also:

$$\frac{\text{Dichte der Polymermatrix}}{\text{Dichte der einzuarbeitenden Mikroballons}} = 1 \text{ } bis \text{ } 1{,}6$$

liegt. Erst nach oder unmittelbar bei der Einarbeitung erfolgt dann die Expansion. Bei Lösungsmittelhaltigen Massen werden die Mikroballons bevorzugt erst nach dem Einarbeiten, Beschichten, Trocknen (Lösungsmittelabdampfen) expandiert. Erfindungsgemäß bevorzugt werden daher DU-Typen verwendet.

Erfindungsgemäß bevorzugt weisen mindestens 90 % aller von Mikroballons gebildeten Hohlräume in der Schicht A einen maximalen Durchmesser von 10 bis 200 μm, stärker bevorzugt von 15 bis 200 μm, auf. Unter dem "maximalen Durchmesser" wird die maximale Ausdehnung eines Mikroballons in beliebiger Raumrichtung verstanden.

Die Bestimmung der Durchmesser erfolgt anhand einer Kryobruchkante im Rasterelektronenmikroskop (REM) bei 500-facher Vergrößerung. Von jedem einzelnen Mikroballon wird grafisch der Durchmesser ermittelt.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Der Anteil der Mikroballons in der Schicht A liegt gemäß einer bevorzugten Ausführungsform der Erfindung zwischen größer 0 Gew.-Teilen und 12 Gew.-Teilen, insbesondere zwischen 0,25 Gew.-Teilen und 5 Gew.-Teilen, alternativ zwischen 0,5 und 1,5 Gew.-Teilen, jeweils bezogen auf die Gesamtzusammensetzung der Schicht A.

Die Angaben beziehen sich jeweils auf unexpandierte Mikroballons.

Eine expandierbare Mikrohohlkugeln enthaltende Polymermasse darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und - im Spektrum der in der Kunststoffverarbeitung möglichen Temperaturen - nicht-thermoplastischem Glas.

Geeignet für die Schicht A sind außerdem - unabhängig gewählt von anderen Additiven - Polymervollkugeln wie PMMA-Kugeln, Glashohlkugeln, Glasvollkugeln, Phenolharzkugeln, keramische Hohlkugeln, keramische Vollkugeln und/oder Kohlenstoffvollkugeln ("Carbon Micro Balloons").

Die absolute Dichte der geschäumten Schicht A beträgt bevorzugt 350 bis 950 kg/m$^3$, stärker bevorzugt 450 bis 930 kg/m$^3$, insbesondere 500 bis 900 kg/m$^3$.

Die relative Dichte beschreibt das Verhältnis der Dichte der geschäumten Schicht A zur Dichte der rezepturidentischen, ungeschäumten Schicht A. Die relative Dichte der Schicht A beträgt vorzugsweise 0,35 bis 0,99, stärker bevorzugt 0,45 bis 0,97, insbesondere 0,50 bis 0,90.

Gemäß einer weiteren bevorzugten Ausführungsform enthält die Schicht ein Schwarzpigment wie Ruß. Besonders bevorzugt liegt der Anteil bei 0,1 Gew.-Teilen und 10 Gew.-Teilen bezogen auf die Gesamtzusammensetzung der Schicht A.

Vorzugsweise liegt die Dicke der Schichten C und D zwischen 10 bis 120 $\mu$m, weiter vorzugsweise liegt die Dicke der Schicht A zwischen 20 und 5000 $\mu$m.

Weiter vorzugsweise weisen die Schicht C und die Schicht D die identische Zusammensetzung auf, weiter vorzugsweise die Schicht A (abgesehen von den in der Schicht A zugesetzten Mikroballons, dem gegebenenfalls anderen Vernetzungssystem, sowie den gegebenenfalls zusätzlich zugegebenen Farbstoffen), die Schicht C und die Schicht D eine identische Zusammensetzung.

Gemäß einer weiteren vorteilhaften Ausführungsform unterscheidet sich die Schicht A (wieder abgesehen von den Mikroballons sowie den gegebenenfalls zusätzlich zugegebenen Farbstoffen) durch das eingesetzte Vernetzungssystem von den Schichten C und/oder D.

Wenn die Schichten bezüglich der eingesetzten Polymere, der Klebharze und gegebenenfalls der weiteren eingesetzten Zusatzstoffe nahezu oder absolut identisch sind, hat dies den Vorteil, dass bei nebeneinanderliegenden (sich berührenden) Schichten keine Migration von Bestandteilen von einer Schicht in die andere zu beobachten ist.

Als Materialien für die Folie werden Polyester, insbesondere Polyethylenterephthalat, Polyamid, Polyimid oder mono- oder biaxial verstrecktes Polypropylen verwendet. Ebenfalls möglich ist auch die Verwendung von mehrschichtigen Laminaten oder Coextrudaten.

Vorzugsweise ist die Folie einschichtig.

Um sehr gute Ergebnisse für die Aufrauhung zu erzielen, ist es zu empfehlen, als Reagenz zum Ätzen der Folie Trichloressigsäure (Cl$_3$C—COOH) oder Trichloressigsäure in Kombination mit inerten kristallinen Verbindungen, bevorzugt Siliziumverbindungen, besonders bevorzugt [SiO$_2$]$_x$, einzusetzen.

Sinn der inerten kristallinen Verbindungen ist, in die Oberfläche der PET-Folie eingebaut zu werden, um auf diese Weise die Rauigkeit und die Oberflächenenergie zu verstärken.

Die Dicke der Folie liegt gemäß einer bevorzugten Ausführungsform zwischen 5 und 250 $\mu$m, vorzugsweise zwischen 6 und 120 $\mu$m, insbesondere zwischen 12 und 100 $\mu$m, ganz besonders zwischen 23 und 50 $\mu$m.

Vorzugsweise besteht die Folie aus Polyethylenterephthalat und weist eine Dicke zwischen 23 und 50 $\mu$m auf.

Eine geeignete Folie ist unter der Handelsbezeichnung Hostaphan $^\circledR$ RNK erhältlich. Diese Folie ist hochtransparent, biaxial orientiert und besteht aus drei coextrudierten Schichten.

Zur Herstellung der Folie kann es angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern.

Als Folienträger, d.h. als Folie, wird vorzugsweise ein nichtdehnbarer Folienträger eingesetzt. Als nichtdehnbar im Sinne der vorliegenden Anmeldung gelten insbesondere solche Folien, die die nachfolgenden Werte für Zugfestigkeit und/oder Reißdehnung erfüllen (angegebene Werte in Bezug auf die weiter hinten angegebene Messmethode R1). Die Zugfestigkeit der Folie liegt bevorzugt bei größer 100 N/mm$^2$, noch bevorzugter bei größer 150 N/mm$^2$, noch bevorzugter bei größer 180 N/mm$^2$, insbesondere bei größer 200 N/mm$^2$, wie zum Beispiel bei größer 270 N/mm$^2$, in Längsrichtung, und bevorzugt bei größer 100 N/mm$^2$, noch bevorzugter bei größer 150 N/mm$^2$, noch bevorzugter bei größer 180 N/mm$^2$, insbesondere bei größer 200 N/mm$^2$, wie zum Beispiel bei größer 270 N/mm$^2$, in Querrichtung.

Die Reißdehnung der Folie liegt bevorzugt bei kleiner 300 %, noch bevorzugter bei kleiner 200 %, insbesondere bei kleiner 150 %, wie zum Beispiel bei kleiner 100 %, in Längsrichtung, und bevorzugt bei kleiner 300 %, noch bevorzugter bei kleiner 200 %, insbesondere bei kleiner 150%, wie zum Beispiel bei kleiner 100 %, in Querrichtung, wobei diese Werte unabhängig von den für die Zugfestigkeit angegebenen oder gleichzeitig realisiert sein können.

Die Folie bestimmt maßgeblich die Zugfestigkeit beziehungsweise Reißdehnung des Haftklebestreifens. Vorzugsweise weist der Haftklebestreifen die gleichen Werte für Zugfestigkeit und Reißdehnung auf, wie sie oben angegeben sind.

Des Weiteren können die äußeren, frei liegenden Flächen der Klebemassenschichten mit beidseitig antiadhäsiv beschichteten Materialien ausgerüstet sein wie ein Trennpapier oder eine Trennfolie, auch Liner genannt, und zwar als temporärer Träger.

Ein Liner (Trennpapier, Trennfolie) ist nicht Bestandteil eines Klebebandes sondern nur ein Hilfsmittel zu dessen Herstellung, Lagerung und/oder für die Weiterverarbeitung durch Stanzen. Darüber hinaus ist ein Liner im Gegensatz zu einem Klebebandträger nicht fest mit einer Klebstoffschicht verbunden.

Die Herstellung und Verarbeitung der Haftklebemassen kann sowohl aus der Lösung als auch aus der Schmelze erfolgen. Das Aufbringen der Haftklebemassen kann durch direkte Beschichtung oder durch Laminierung, insbesondere Heißlaminierung erfolgen.

Typische Konfektionierformen der erfindungsgemäßen Haftklebestreifen sind Klebebandrollen sowie Klebestreifen, wie sie zum Beispiel in Form von Stanzlingen erhalten werden.

Vorzugsweise weisen alle Schichten im Wesentlichen die Form eines Quaders auf. Weiter vorzugsweise sind alle Schichten vollflächig miteinander verbunden.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband weist somit eine Längsausdehnung und eine Breitenausdehnung auf. Das Klebeband weist auch eine senkrecht zu beiden Ausdehnungen verlaufende Dicke auf, wobei die Breitenausdehnung und Längsausdehnung um ein Vielfaches größer sind als die Dicke. Die Dicke ist über die gesamte durch Länge und Breite bestimmte Flächenausdehnung des Klebebands möglichst gleich, vorzugsweise exakt gleich.

Das Klebeband liegt insbesondere in Bahnform vor. Unter einer Bahn wird ein Objekt verstanden, dessen Länge um ein Vielfaches größer ist als die Breite und die Breite entlang der gesamten Länge in etwa vorzugsweise genau gleich bleibend ausgebildet ist.

Das Klebeband kann in Form einer Rolle, also in Form einer archimedischen Spirale auf sich selbst aufgerollt, hergestellt werden.

Der Haftklebestreifen weist vorzugsweise eine Dicke auf von 40 $\mu$m bis 6000 $\mu$m, weiter vorzugsweise von 50 bis 500 $\mu$m, besonders vorzugsweise von 80 bis 350 $\mu$m, ganz besonders vorzugsweise von 100 bis 300 $\mu$m auf.

Die Erfindung betrifft weiterhin eine vernetzte Haftklebemasse, erhältlich durch Vernetzung einer vernetzbaren erfindungsgemäßen Klebemasse, wie sie vorstehend dargestellt wurde. Die Vernetzung findet dabei bevorzugt an einer zur Schicht beziehungsweise zum Film ausgebildeten Haftklebemasse statt.

Die Vernetzungsreaktion kann dabei insbesondere wie folgt ablaufen:
In einer vorteilhaften Vorgehensweise werden die beiden Substanzen als Reinstoff oder in einem geeigneten Lösemittel vorgelöst zu dem in Lösung vorliegenden Polymer gegeben, dann das Polymer mit den Vernetzern gut durchgemischt, auf einen temporären oder permanenten Träger beschichtet und dann unter geeigneten Bedingungen getrocknet, wobei die Vernetzung stattfindet.

In einer optionalen, insbesondere für sehr reaktive Systeme geeigneten Vorgehensweise wird zunächst einer der Vernetzer in Reinform oder vorgelöst zu der Polymerlösung gegeben. Der zweite Vernetzer wird erst kurz vor der Beschichtung zugeführt, zum Beispiel über eine Inline-Dosierung mit nachgeschaltetem aktiven oder statischem Mischer und anschließender Beschichtung und Trocknung.

Die Topfzeit (Verarbeitungszeit) der koordinativen Vernetzer kann durch Zugabe der zuvor beschriebenen Liganden zu der Polymer-Vernetzer-Lösung erhöht werden. Der Ligandenüberschuss wird dann bei der Trocknung entfernt; erst ab dann sind die koordinativen Vernetzer (voll) reaktiv.

Die Trocknungsbedingungen (Temperatur und Verweilzeit) werden sehr bevorzugt so gewählt, dass nicht nur das Lösungsmittel entfernt wird, sondern auch die Vernetzung auch zu einem Großteil abgeschlossen ist, so dass ein stabiles Vernetzungsniveau - insbesondere bei höheren Temperaturen - erreicht wird. Insbesondere wird die Klebemasse vollständig vernetzt.

Unter vollständiger Vernetzung einer Klebemasse wird erfindungsgemäß verstanden, dass deren maximale Scherstrecke "max" im Mikroscherweg-Test bei den dort genannten Bedingungen bei wiederholter (beispielsweise täglicher) Mikroscherweg-Messung innerhalb einer Periode von 48 Stunden nur im Rahmen der Genauigkeit der Messmethode (etwa bis zu maximal 5 %) ändert, wenn die Klebmasse bei Raumtemperatur (23 °C) bei ansonsten Normbedingungen gelagert wird.

Der Nachweis der vollständigen Vernetzung kann je nach Anwendungsgebiet der Klebemasse auch für andere Temperaturen (zum Beispiel 40 °C, insbesondere solchen Temperaturen, die den jeweiligen Anwendungstemperaturen entsprechen) durchgeführt werden.

In vorteilhafter Weise kann die Haftklebemasse zum Verkleben von Bauteilen feinmechanischer, optischer, elektrischer und/oder elektronischer Geräte eingesetzt werden, zum Beispiel bei deren Herstellung, Reparatur, Verzierung oder dergleichen. Dabei können beispielsweise Materialien wie Kunststoffe, Gläser, Metalle und dergleichen zur Verklebung kommen.

Die Haftklebemasse eignet sich insbesondere auch zur permanenten Verklebung von flexiblen Materialien, insbesondere bei der Herstellung flexibler Displays. Solche Displays nehmen an Bedeutung zu.

In vorteilhafter Weise kann die Haftklebemasse zum Verkleben von Fenstern oder Linsen in Gehäusen feinmechanischer, optischer und/oder elektronischer Geräte (sogenanntes "Lens Mounting") eingesetzt werden. Dabei ist zumindest eines der starren oder flexiblen Substrate durchsichtig (transparent) oder durchscheinend (transluzent). Das durchsichtige beziehungsweise durchscheinende Substrat kann beispielsweise ein Fenster oder eine optische Linse zum Zwecke des Schutzes darunter angeordneter empfindlicher Komponenten - solche Komponenten können beispielsweise Flüssigkristallanzeigen (LCD), Leuchtdioden (LED) oder organische Leuchtdioden (OLED) von Displays, aber auch gedruckte Schaltungen oder andere empfindliche elektronische Bauteile sein; dies spielt beispielsweise bei der Anwendung für berührungsempfindliche Displays eine große Rolle - und/oder zur Bewirkung optischer Effekte für die Funktion des Gerätes - zum Beispiel Lichtbrechung, Lichtbündelung, Lichtabschwächung, Lichtverstärkung usw. - sein.

Sehr vorteilhaft wird das transparente Substrat derart gewählt, dass es einen Haze-Wert von höchstens 50 %, bevorzugt von nicht mehr als 10 %, sehr bevorzugt von nicht mehr als 5 % (gemessen nach ASTM D 1003) aufweist.

Das zweite Substrat ist vorzugsweise ebenfalls ein Bauteil eines feinmechanischen, optischen und/oder elektronischen Gerätes. Insbesondere ist hier an Gehäuse solcher Geräte oder an Halterungen für wie vorstehend beschriebene Fenster beziehungsweise Linsen zu denken.

In einer bevorzugten Vorgehensweise ist das durchsichtige beziehungsweise durchscheinende Substrat ein Substrat aus Glas, Polymethylmethacrylat und/oder Polycarbonat.

Insbesondere kann das zweite Substrat aus Kunststoffen wie Acrylnitril-Butadien-Styrol-Copolymeren (ABS), Polyamid oder Polycarbonat bestehen, die insbesondere auch glasfaserverstärkt sein können; oder aus Metallen, wie Aluminium - auch anodisiertes (eloxiertes) Aluminium - oder Magnesium und Metalllegierungen

Auch den Substrat-Materialien können Additive, wie beispielsweise Farbstoffe, Lichtschutzmittel, Alterungsschutzmittel, Weichmacher oder dergleichen beigemischt sein, sofern dies für den beabsichtigten Einsatzzweck vorteilhaft ist; bei durchsichtigen oder durchscheinenden Materialien insbesondere insoweit, als es diese optischen Eigenschaften nicht oder nur in vertretbarem Maße stört.

Erfindungsgemäß ist der erfindungsgemäße Verbund somit ein Bauteil eines elektronischen, optischen oder feinmechanischen Geräts, wie es in der obigen Tabelle angeführt ist.

Anhand der nachfolgend beschriebenen Figuren sowie Beispielen werden besonders vorteilhafte Ausführungen der Erfindung näher erläutert, ohne damit die Erfindung unnötig einschränken zu wollen.

Es zeigen

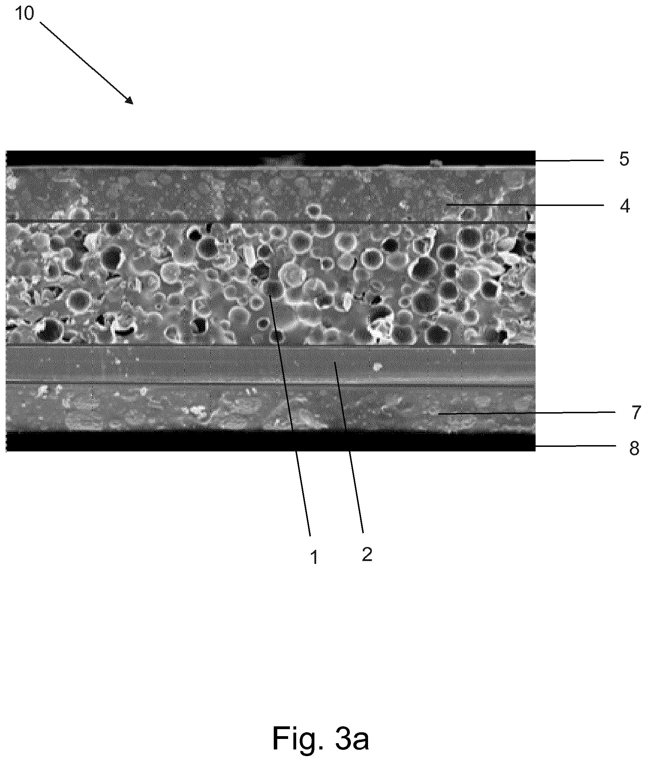

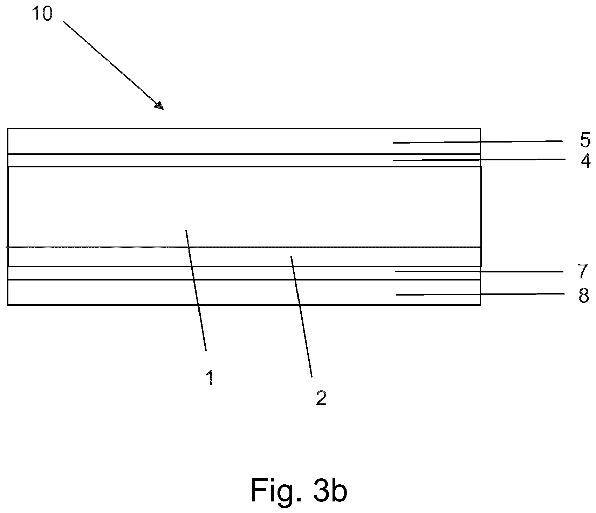

Figur 3a, 3b      einen erfindungsgemäßen vierschichtigen haftklebrigen Klebestreifen.

In den Figuren 3a und 3b ist der erfindungsgemäße Haftklebstreifen 10 aus vier Schichten 1, 2, 4, 7 gezeigt. Die Figur 3a zeigt photographisch den Querschnitt durch den Haftklebestreifen 10. Die Figur 3b stellt vereinfachend den Aufbau des Haftklebestreifens 10 ebenfalls als Querschnitt dar.

Der Streifen besteht aus einer geschäumten Schicht A 1.

Auf der geschäumten Schicht 1 (Schicht A) ist unterseitig eine beidseitig geätzte PET-Folie (Schicht B) 2 vorhanden.

Auf der Oberseite der geschäumten Schicht 1 beziehungsweise auf der Unterseite der PET-Folie 2 sind zwei außenliegende selbstklebende Klebemassenschichten (Schicht C und Schicht D) 4, 7 vorhanden.

Die selbstklebenden Klebemassenschichten (Schicht C und Schicht D) 4, 7 sind ihrerseits jeweils mit einem Liner 5, 8 eingedeckt.

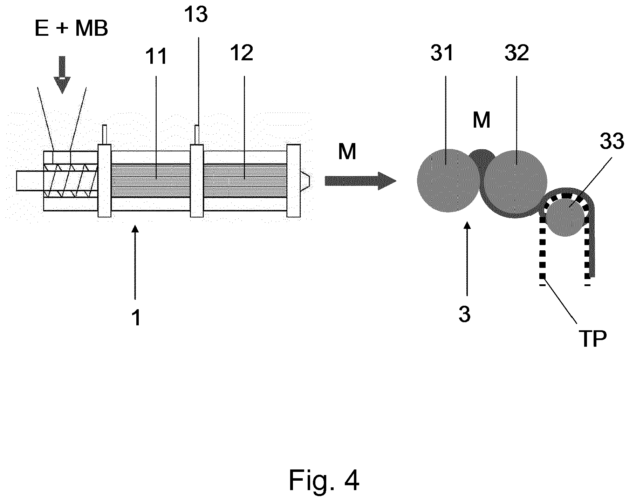

Weiterhin umfasst die Erfindung ein Verfahren zur Herstellung einer erfindungsgemäßen Klebemasse, die expandierte Mikroballons enthält, siehe Figur 4, wobei

- die Bestandteile zur Bildung der Klebemasse wie Polymere, Harze oder Füllstoffe und nicht expandierten Mikroballons in einem ersten Mischaggregat gemischt werden und unter Überdruck auf Expansionstemperatur erhitzt werden
- die Mikroballons beim Austritt aus dem Mischaggregat expandiert werden,
- die Klebemassemischung mitsamt der expandierten Mikroballons in einem Walzenauftragswerk zu einer Schicht ausgeformt wird,
- die Klebemassemischung mitsamt der expandierten Mikroballons gegebenenfalls auf ein bahnförmiges Träger- oder Releasematerial aufgebracht wird.

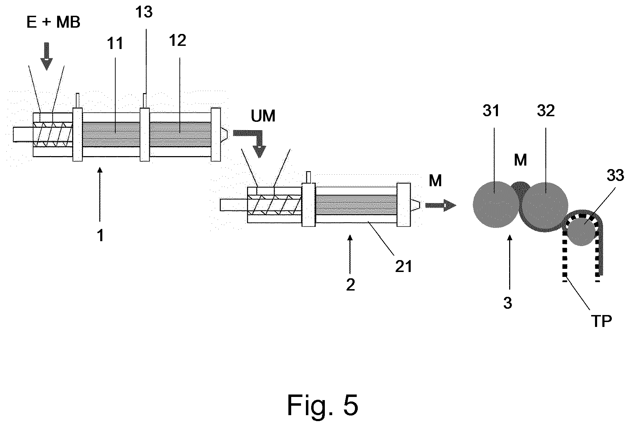

Ebenso umfasst die Erfindung ein Verfahren zur Herstellung einer erfindungsgemäßen Klebemasse, die expandierte Mikroballons enthält, siehe Figur 5, wobei

- die Bestandteile zur Bildung der Klebemasse wie Polymere, Harze oder Füllstoffe mit nicht expandierten Mikroballons in einem ersten Mischaggregat unter Überdruck gemischt werden und auf eine Temperatur unterhalb der Expansionstemperatur der Mikroballons temperiert werden,

- die gemischte, insbesondere homogene Klebemasse aus dem ersten Mischaggregat in ein zweites Aggregat übergeben werden und unter Überdruck auf Expansionstemperatur erhitzt werden
- die Mikroballons in dem zweiten Aggregat oder beim Austritt aus dem zweiten Aggregat expandiert werden,
- die Klebemassemischung mitsamt der expandierten Mikroballons in einem Walzenauftragswerk zu einer Schicht ausgeformt wird,
- die Klebemassemischung mitsamt der expandierten Mikroballons gegebenenfalls auf ein bahnförmiges Träger- oder Releasematerial aufgebracht wird.

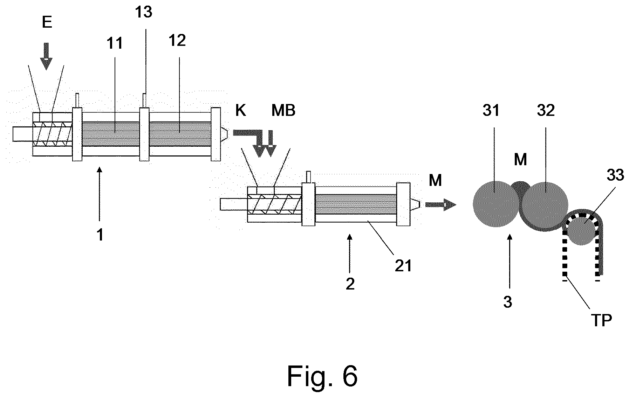

Ebenso betrifft die Erfindung ein Verfahren zur Herstellung einer erfindungsgemäßen Klebemasse, die expandierte Mikroballons enthält, siehe Figur 6, wobei

- die Bestandteile zur Bildung der Klebemasse wie Polymere, Harze oder Füllstoffe in einem ersten Mischaggregat gemischt werden,
- die gemischte, insbesondere homogene Klebemasse aus dem ersten Mischaggregat in ein zweites Mischaggregat übergeben wird, in das gleichzeitig die nicht expandierten Mikroballons aufgegeben werden,
- die Mikroballons in dem zweiten Mischaggregat oder beim Austritt aus dem zweiten Mischaggregat expandiert werden,
- die Klebemassemischung mitsamt der expandierten Mikroballons in einem Walzenauftragswerk zu einer Schicht ausgeformt wird,
- die Klebemassemischung mitsamt der expandierten Mikroballons gegebenenfalls auf ein bahnförmiges Träger- oder Releasematerial aufgebracht wird.

Gemäß einer bevorzugten Ausführungsform der Erfindung wird die Klebemasse in einem Walzenauftragswerk ausgeformt und auf das Trägermaterial aufgebracht.

Mit Mikroballons geschäumte Massen müssen in der Regel vor der Beschichtung nicht entgast werden, um einen gleichmäßiges, geschlossenes Beschichtungsbild zu erhalten. Die expandierenden Mikroballons verdrängen die während der Compoundierung in die Klebemasse eingeschlossene Luft. Bei hohen Durchsätzen ist es dennoch ratsam, die Massen vor der Beschichtung zu entgasen, um eine gleichmäßige Massevorlage im Walzenspalt zu erhalten. Die Entgasung erfolgt idealerweise unmittelbar vor dem Walzenauftragswerk bei Mischtemperatur und einem Differenzdruck zum Umgebungsdruck von mindestens 200 mbar.

Des Weiteren ist vorteilhaft, wenn

- das erste Mischaggregat ein kontinuierliches Aggregat ist, insbesondere ein Planetwalzenextruder, ein Doppelschneckenextruder oder ein Stiftextruder,
- das erste Mischaggregat ein diskontinuierliches Aggregat ist, insbesondere ein Z-Kneter oder ein Innenmischer,
- das zweite Mischaggregat ein Planetwalzenextruder, ein Einschnecken- oder Doppelschneckenextruder oder ein Stiftextruder und/oder
- das Ausformaggregat, in dem die Klebemasse mitsamt der expandierten Mikroballons zu einer Trägerschicht ausgeformt wird, ein Kalander, ein Walzenauftragswerk oder ein Spalt, gebildet von einer Walze und einem feststehenden Rakel, ist.

Mit den erfindungsgemäßen Verfahren sind alle vorbekannten und in der Literatur beschriebenen Komponenten von Klebemassen, insbesondere selbstklebende, lösemittelfrei verarbeitbar.

Im Folgenden werden die oben beschriebenen, innerhalb des Erfindungsgedankens liegenden Verfahren in besonders hervorragend ausgestalteten Varianten veranschaulicht, ohne sich durch die Wahl der abgebildeten Figuren unnötig beschränken zu wollen.

Es zeigen

Figur 4   das Verfahren mit einem Mischaggregat, wobei die Mikroballons direkt im ersten Mischaggregat zugesetzt werden,

Figur 5   das Verfahren mit zwei Mischaggregaten, wobei die Mikroballons im ersten Mischaggregat zugesetzt werden, sowie

Figur 6   das Verfahren mit zwei Mischaggregaten, wobei die Mikroballons erst im zweiten Mischaggregat zugesetzt werden.

In der Figur 4 ist ein besonders vorteilhaft gestaltetes Verfahren zur Herstellung eines geschäumten druckempfindlichen Selbstklebebandes gezeigt.

In einem kontinuierlichen Mischaggregat wie zum Beispiel einem Planetwalzenextruder (PWE) wird eine (Selbst-)Klebemasse hergestellt.

Dazu werden die Edukte E, die die Klebemasse bilden sollen, in den Planetwalzenextruder PWE 1 aufgegeben. Gleichzeitig werden die nicht expandierten Mikroballons MB während des Compoundierprozesses in die Selbstklebemasse homogen und unter Überdruck eingearbeitet.

Die erforderlichen Temperaturen zur homogenen Herstellung der Selbstklebemasse und zur Expansion der Mikroballons sind so aufeinander abgestimmt, dass die Mikroballons beim Austritt aus dem PWE 1 durch den Druckabfall bei Düsenaustritt in der Selbstklebemasse M aufschäumen und dabei die Masseoberfläche durchbrechen.

Mit einem Walzenauftragswerk 3 als Ausformaggregat wird diese schaumartige Klebemasse M kalandriert und auf ein bahnförmiges Trägermaterial wie zum Beispiel Trennpapier TP beschichtet, teilweise kann noch eine Nachschäumung im Walzenspalt stattfinden. Das Walzenauftragswerk 3 besteht aus einer Rakelwalze 31 und einer Beschichtungswalze 32. An die letztere wird das Trennpapier TP über eine Aufnahmewalze 33 geführt, so dass das Trennpapier TP die Klebemasse K von der Beschichtungswalze 32 übernimmt.

Gleichzeitig werden die expandierten Mikroballons MB wieder in die Polymermatrix der Klebemasse K gedrückt, und somit eine glatte Oberfläche erzeugt.

In der Figur 5 ist ein weiteres besonders vorteilhaft gestaltetes Verfahren zur Herstellung eines geschäumten druckempfindlichen Selbstklebebandes gezeigt.

Der Planetwalzenextruder PWE 1 weist zwei hintereinander geschaltete Mischzonen 11, 12 auf, in denen sich eine Zentralspindel dreht. Des Weiteren sind sechs Planetenspindeln je Heizzone vorhanden. In den Einspritzring 13 werden weitere Edukte zugegeben wie zum Beispiel Weichmacher oder flüssiges Harz.

Ein geeignetes Gerät ist beispielsweise der Planetwalzenextruder der Firma Entex in Bochum.

Anschließend werden die Mikroballons in einem zweiten Mischaggregat wie zum Beispiel einem Einschneckenextruder homogen in die Selbstklebemasse unter Überdruck eingearbeitet, oberhalb der Expansionstemperatur erhitzt und beim Austreten geschäumt. Dazu wird die aus den Edukten E gebildete Klebemasse K hier in den Einschneckenextruder ESE 2 aufgegeben, gleichzeitig werden die Mikroballons MB eingefüllt. Der Einschneckenextruder ESE weist über die Lauflänge 21 insgesamt vier Heizzonen auf.

Ein geeignetes Gerät ist beispielsweise ein Einschneckenextruder der Firma Kiener.

Die Mikroballons MB durchbrechen während der durch Druckabfall verursachten Expansion am Düsenaustritt des ESEs 2 die Masseoberfläche.

Mit einem Walzenauftragswerk 3 wird diese schaumartige Klebemasse M kalandriert und auf ein bahnförmiges Trägermaterial wie zum Beispiel Trennpapier TP beschichtet, teilweise kann noch eine Nachschäumung im Walzenspalt stattfinden. Das Walzenauftragswerk 3 besteht aus einer Rakelwalze 31 und einer Beschichtungswalze 32. An die letztere wird das Trennpapier TP über eine Aufnahmewalze 33 geführt, so dass das Trennpapier TP die Klebemasse K von der Beschichtungswalze 32 übernimmt. Gleichzeitig werden die expandierten Mikroballons MB wieder in die Polymermatrix der Klebemasse K gedrückt, und somit eine glatte Oberfläche erzeugt.

In der Figur 6 ist ein weiteres besonders vorteilhaft gestaltetes Verfahren zur Herstellung eines geschäumten druckempfindlichen Selbstklebebandes gezeigt.

In einem kontinuierlichen Mischaggregat wie zum Beispiel einem Planetwalzenextruder (PWE) wird eine (Selbst-)Klebemasse hergestellt.

Hier werden die Edukte E, die die Klebemasse bilden sollen, in den Planetwalzenextruder PWE 1 aufgegeben. Der Planetwalzenextruder PWE 1 weist zwei hintereinander geschaltete Mischzonen 11, 12 auf, in denen sich eine Zentralspindel dreht. Des Weiteren sind 6 Planetenspindeln je Heizzone vorhanden.

In den Einspritzring 13 werden weitere Edukte zugegeben wie zum Beispiel Weichmacher oder flüssiges Harz.

Ein geeignetes Gerät ist beispielsweise der Planetwalzenextruder der Firma Entex in Bochum.

Anschließend werden die Mikroballons in einem zweiten Mischaggregat wie zum Beispiel einem Einschneckenextruder homogen in die Selbstklebemasse unter Überdruck eingearbeitet, oberhalb der Expansionstemperatur erhitzt und beim Austreten geschäumt. Dazu wird die aus den Edukten E gebildete Klebemasse K hier in den Einschneckenextruder ESE 2 aufgegeben, gleichzeitig werden die Mikroballons MB eingefüllt. Der Einschneckenextruder ESE weist über die Lauflänge 21 insgesamt vier Heizzonen auf.

Ein geeignetes Gerät ist beispielsweise ein Einschneckenextruder der Firma Kiener.

Die Mikroballons MB durchbrechen während der durch Druckabfall verursachten Expansion am Düsenaustritt des ESEs 2 die Masseoberfläche.

Mit einem Walzenauftragswerk 3 wird diese schaumartige Klebemasse M kalandriert und auf ein bahnförmiges Trägermaterial wie zum Beispiel Trennpapier TP beschichtet, teilweise kann noch eine Nachschäumung im Walzenspalt stattfinden. Das Walzenauftragswerk 3 besteht aus einer Rakelwalze 31 und einer Beschichtungswalze 32. An die letztere wird das Trennpapier TP über eine Aufnahmewalze 33 geführt, so dass das Trennpapier TP die Klebemasse K von der Beschichtungswalze 32 übernimmt. Gleichzeitig werden die expandierten Mikroballons MB wieder in die Polymermatrix der Klebemasse K gedrückt, und somit eine glatte Oberfläche erzeugt.

Mit sinkendem Spaltdruck im Walzenspalt verringern sich die Verklebungsflächen der beschichteten, geschäumten Selbstklebemassen, da die Mikroballons dann weniger stark zurückgedrückt werden, wie der Figur 4 entnommen werden kann. Die Figur 4 zeigt die Verklebungsflächen in Abhängigkeit vom Beschichtungsverfahren beziehungsweise -parameter. Der benötigte Spaltdruck ist stark abhängig von dem verwendeten Massesystem, je höher die Viskosität, desto größer sollte der Spaltdruck sein, abhängig von der gewünschten Schichtdicke und der gewählten Beschichtungsgeschwindigkeit. In der Praxis hat sich ein Spaltdruck von größer 4 N/mm bewährt, unter besonders hohen Beschichtungsgeschwindigkeiten größer 50 m/min, bei niedrigen Masseaufträgen (Flächengewichten kleiner 70 g/m$^2$) und hochviskosen Massen (50.000 Pa*s bei 0,1 rad und 110 °C) können auch Spaltdrücke größer 50 N/mm benötigt werden.

Es hat sich bewährt, die Temperatur der Walzen der Expansionstemperatur der Mikroballons anzupassen. Idealerweise liegt die Walzentemperatur der ersten Walzen über der Expansionstemperatur der Mikroballons, um ein Nachschäumen der Mikroballons zu ermöglichen, ohne sie zu zerstören. Die letzte Walze sollte eine Temperatur gleich oder unter der Expansionstemperatur aufweisen, damit die Mikroballonhülle erstarren kann und sich die erfindungsgemäße, glatte Oberfläche ausbildet.

Viele Aggregate zur kontinuierlichen Herstellung und Verarbeitung von lösemittelfreien Polymersystemen sind bekannt. Zumeist finden Schneckenmaschinen wie Einschnecken- und Doppelschneckenextruder unterschiedlichster Verfahrenslänge und Bestückung Verwendung. Es werden aber auch kontinuierlich arbeitende Kneter verschiedenster Bauart, zum Beispiel auch Kombinationen aus Knetern und Schneckenmaschinen, oder auch Planetwalzenextruder für diese Aufgabe eingesetzt.

Planetwalzenextruder sind seit längerer Zeit bekannt und fanden zuerst Einsatz in der Verarbeitung von Thermoplasten wie zum Beispiel PVC, wo sie hauptsächlich zum Beschicken der Folgeeinheiten wie zum Beispiel Kalander oder Walzwerke verwendet wurden. Durch ihren Vorteil der großen Oberflächenerneuerung für Material- und Wärmeaustausch, mit dem sich die über Friktion eingebrachte Energie rasch und effektiv abführen lässt, sowie der geringen Verweilzeit und des engen Verweilzeitspektrums hat sich ihr Einsatzgebiet in letzter Zeit unter anderem auch auf Compoundierprozesse erweitert, die eine besonders temperaturkontrollierte Fahrweise erfordern. Planetwalzenextruder gibt es je nach Hersteller in verschiedenen Ausführungen und Größen. Je nach gewünschter Durchsatzleistung liegen die Durchmesser der Walzenzylinder typischerweise zwischen 70 mm und 400 mm.

Planetwalzenextruder haben in der Regel einen Füllteil und einen Compoundierteil.

Der Füllteil besteht aus einer Förderschnecke, auf die sämtliche Feststoffkomponenten kontinuierlich dosiert werden. Die Förderschnecke übergibt das Material dann dem Compoundierteil. Der Bereich des Füllteils mit der Schnecke ist vorzugsweise gekühlt, um Anbackungen von Materialien auf der Schnecke zu vermeiden. Es gibt aber auch Ausführungsformen ohne Schneckenteil, bei denen das Material direkt zwischen Zentral- und Planetenspindeln aufgegeben wird. Für die Wirksamkeit des erfindungsgemäßen Verfahrens ist dies aber nicht von Bedeutung.

Der Compoundierteil besteht aus einer angetriebenen Zentralspindel und mehreren Planetenspindeln, die innerhalb eines oder mehrerer Walzenzylinder mit Innenschrägverzahnung um die Zentralspindel umlaufen. Die Drehzahl der Zentralspindel und damit die Umlaufgeschwindigkeit der Planetenspindeln kann variiert werden und ist damit ein wichtiger Parameter zur Steuerung des Compoundierprozesses.

Die Materialien werden zwischen Zentral- und Planetenspindeln beziehungsweise zwischen Planetenspindeln und Schrägverzahnung des Walzenteils umgewälzt, so dass unter Einfluss von Scherenergie und äußerer Temperierung die Dispergierung der Materialien zu einem homogenen Compound erfolgt.

Die Anzahl der in jedem Walzenzylinder umlaufenden Planetenspindeln kann variiert und somit den Erfordernissen des Prozesses angepasst werden. Die Spindelanzahl beeinflusst das freie Volumen innerhalb des Planetwalzenextruders, die Verweilzeit des Materials im Prozess und bestimmt zudem die Flächengröße für den Wärme- und Materialaustausch. Die Anzahl der Planetenspindeln hat über die eingeleitete Scherenergie Einfluss auf das Compoundierergebnis. Bei konstantem Walzenzylinderdurchmesser lässt sich mit größerer Spindelanzahl eine bessere Homogenisier- und Dispergierleistung beziehungsweise ein größerer Produktdurchsatz erzielen.

Die maximale Anzahl an Planetenspindeln, die sich zwischen Zentralspindel und Walzenzylinder einbauen lässt, ist abhängig vom Durchmesser des Walzenzylinders und vom Durchmesser der verwendeten Planetenspindeln. Bei Verwendung größerer Walzendurchmesser, wie sie zum Erzielen von Durchsatzraten im Produktionsmaßstab notwendig sind, beziehungsweise kleinerer Durchmesser für die Planetenspindeln können die Walzenzylinder mit einer größeren Anzahl an Planetenspindeln bestückt werden. Typischerweise werden bei einem Walzendurchmesser von D=70 mm bis zu sieben Planetenspindeln verwendet, während bei einem Walzendurchmesser von D=200 mm zum Beispiel zehn und bei einem Walzendurchmesser von D=400 mm beispielsweise 24 Planetenspindeln verwendet werden können.

Erfindungsgemäß wird vorgeschlagen, die Beschichtung der geschäumten Klebemassen lösungsmittelfrei mit einem Mehrwalzenauftragswerk durchzuführen. Dies können Auftragswerke bestehend aus mindestens zwei Walzen mit mindestens einem Walzenspalt bis zu fünf Walzen mit drei Walzenspalten sein.

Denkbar sind auch Beschichtungswerke wie Kalander (I,F,L-Kalander), so dass die geschäumte Klebemasse beim Durchgang durch einen oder mehrere Walzenspalte auf die gewünschte Dicke ausgeformt wird.

Als besonders vorteilhaft hat sich dabei erwiesen, die Temperaturführung der einzelnen Walzen so zu wählen, dass gegebenenfalls eine kontrollierte Nachschäumung stattfinden kann, in der Weise, dass übergebende Walzen eine Temperatur oberhalb oder gleich der Schäumungstemperatur der gewählten Mikroballon-Type aufweisen können, während abnehmende Walzen eine Temperatur unterhalb oder gleich der Schäumungstemperatur haben sollten um eine unkontrollierte Schäumung zu verhindern und wobei alle Walzen einzeln auf Temperaturen von 30 bis 220 °C eingestellt werden können.

Um das Übergabeverhalten der ausgeformten Masseschicht von einer auf eine andere Walze zu verbessern, können weiterhin antiadhäsiv ausgerüstete Walzen oder Rasterwalzen zum Einsatz kommen. Um einen hinreichend präzise ausgeformten Klebstofffilm zu erzeugen können die Umfangsgeschwindigkeiten der Walzen Differenzen aufweisen.

Das bevorzugte 4-Walzenauftragswerk wird gebildet von einer Dosierwalze, einer Rakelwalze, die die Dicke der Schicht auf dem Trägermaterial bestimmt und die parallel zur Dosierwalze angeordnet ist, und einer Übertragungswalze, die sich unterhalb der Dosierwalze befindet. Auf der Auflegewalze, die zusammen mit der Übertragungswalze einen zweiten Walzenspalt bildet, werden die Masse und das bahnförmige Material zusammengeführt.

Je nach Art des zu beschichtenden bahnförmigen Trägermaterials kann die Beschichtung im Gleichlauf- oder Gegenlaufverfahren erfolgen.

Das Ausformaggregat kann auch durch einen Spalt gebildet werden, der sich zwischen einer Walze und einem feststehenden Rakel ergibt. Das feststehende Rakel kann ein Messerrakel sein oder eine feststehende (Halb-)Walze.

In einem alternativen Herstellungsverfahren werden alle Bestandteile der Klebemasse in einem Lösemittelgemisch (Benzin/Toluol/Aceton) aufgelöst. Die Mikroballons wurden in Benzin angeschlämmt und in die gelöste Klebemasse eingerührt. Sobald die Mikroballons homogen in der Lösung verteilt sind, kann die Klebemasse beschichtet werden, beispielsweise durch einen Rakel auf einen konventionellen PET-Liner.

Im ersten Schritt wird die beschichtete Klebemasse offen bei 100 °C für 15 min getrocknet. Nach dem Trocknen wird die Klebeschicht mit einer zweiten Lage PET-Liner eingedeckt und für 5 min bei 150 °C im Ofen geschäumt, und zwar abgedeckt zwischen zwei Linern, um eine besonders glatte Oberfläche zu erzeugen.

Die so erzeugte Oberfläche weist eine Rauigkeit $R_a$ kleiner 15 $\mu$m, besonders bevorzugt kleiner 10 $\mu$m auf.

Die Oberflächenrauigkeit $R_a$ ist eine Einheit für den Industriestandard für die Qualität der Oberflächenendbearbeitung und stellt die durchschnittliche Höhe der Rauheit dar, insbesondere die durchschnittliche Absolutentfernung von der Mittellinie des Rauheitsprofils innerhalb des Auswertungsbereichs. Gemessen wird diese mittels Lasertriangulation.

Die Expansionstemperatur ist zumeist immer höher als Trocknungstemperatur.

Nachfolgend wird die Erfindung durch einige Beispiele näher erläutert.

**Beispiele**

Im Folgenden wird die Präparation des Ausgangspolymers beschrieben. Die untersuchten Polymere werden konventionell über eine freie radikalische Polymerisation in Lösung hergestellt.

Basispolymer P1

Ein für radikalische Polymerisationen konventioneller Reaktor wurde mit 47,5 kg 2-Ethylhexylacrylat, 47,5 kg n-Butylacrylat, 5 kg Acrylsäure und 66 kg Benzin/Aceton (70/30) befüllt. Nach 45minütiger Durchleitung von Stickstoffgas unter Rühren wurde der Reaktor auf 58 °C hochgeheizt und 50 g AIBN hinzugegeben. Anschließend wurde das äußere Heizbad auf 75 °C erwärmt und die Reaktion konstant bei dieser Außentemperatur durchgeführt. Nach 1 h wurden erneut 50 g AIBN zugegeben und nach 4 h wurde mit 20 kg Benzin/Aceton Gemisch verdünnt.

Nach 5,5 sowie nach 7 h wurde jeweils mit 150 g Bis-(4-tert-butylcyclohexyl)-peroxydicarbonat nachinitiiert. Nach 22 h Reaktionszeit wurde die Polymerisation abgebrochen und auf Raumtemperatur abgekühlt. Das Polyacrylat hat ein mittleres Molekulargewicht von $M_w$ = 386.000 g/mol, Polydispersität PD (Mw/Mn) = 7,6.

Beispiel Haftklebmasse B1

Es wird eine Mischung hergestellt, umfassend 42,425 Gew.-%, bezogen auf das Trockengewicht des Polymers, das Basispolymer P1, 37,5 Gew.-% das Harz Dertophene T sowie 20 Gew.-% Kraton D 1118. Durch die Zugabe von Benzin wird ein Feststoffgehalt von 38 % eingestellt. Die Mischung aus Polymer und Harz wird solange gerührt bis sich das Harz sichtbar vollständig gelöst hat. Im Anschluss werden 0,075 Gew. % des kovalenten Vernetzers Erysis GA 240 (N,N,N',N'-tetrakis(2,3-epoxypropyl)-m-xylen-a,a'-diamin der Firma Emerald Performance Materials, CAS NO.

63738-22-7) zugegeben. Die Mischung wird für 15 Minuten bei Raumtemperatur gerührt.

| • Kraton 1118 | Styrol-Butadien-Styrol-Blockcopolymer der Firma Kraton Polymers 78 Gew.-% 3-Block, 22 Gew.-% 2-Block; Blockpolystyrolgehalt: 33 Gew.-% (Molekulargewicht $M_w$ des 3-Blockanteils von 150.000 g/mol) |
| • Dertophene T | Terpenphenolharz (Erweichungspunkt 110 °C; $M_w$ = 500 bis 800 g/mol; D = 1,50), DRT resins, 25359-84-6 |

Beispiel Haftklebmasse B2

Es wird eine Mischung hergestellt, umfassend 42,34 Gew.-%, bezogen auf das Trockengewicht des Polymers, das Basispolymer P1, 35,25 Gew.-% das Harz Dertophene T sowie 17 Gew.-% Kraton D 1118. Durch die Zugabe von Benzin wird ein Feststoffgehalt von 38 % eingestellt. Die Mischung aus Polymer und Harz wird solange gerührt bis sich das Harz sichtbar vollständig gelöst hat. Im Anschluss werden 0,035 Gew. % des kovalenten Vernetzers Erysis GA 240 (ein tetrafunktionales Epoxidharz basierend auf meta-Xylendiamin, CAS NO. 63738-22-7) und 0,075 Gew. % Al-Chelat zugegeben. Die Mischung wird für 15 Minuten bei Raumtemperatur gerührt.

Währenddessen werden 2,3 Gew.-% Mikroballons (Expancel 920 DU20) sowie 3 Gew.-% Hostatint hinzugefügt.

| • Al-Chelat: | Al-(III)-acetylacetonat (Firma Sigma Aldrich) |
| • Expancel 920 DU20 | Mikroballons |
| • Hostatint | Schwarzpigment der Firma Clariant |

**Beispiel 1**

Der vierschichtige Haftklebestreifen wird nach dem im Folgenden geschilderten Verfahren hergestellt:

Die Schicht C (bestehend aus der Haftklebemasse B1) wird mit insbesondere 75 g/m$^2$ auf einen Prozessliner beschichtet und aufgewickelt.

Die Schicht D (bestehend aus der Haftklebemasse B1) wird mit insbesondere 75 g/m$^2$ auf einen weiteren Liner beschichtet und nach der Trocknung wird eine 23 µm starke, doppelseitig geätzte PET-Folie (Schicht B) zukaschiert. Die Zugfestigkeit der gewählten PET-Folie beträgt 185 N/mm$^2$ in Längsrichtung und 210 N/mm$^2$ in Querrichtung. Die Reißdehnung der Folie beträgt 146 % in Längsrichtung und 92 % in Querrichtung. Es wird in allen Beispielen die gleiche PET-Folie verwendet.

Die mikroballonhaltige Schicht A (bestehend aus der Haftklebemasse B2) wird mit insbesondere 86 g/m$^2$ auf einen weiteren Liner beschichtet und nach der Trocknung mit der Schicht C auf dem Prozessliner zusammenkaschiert. Der letzte Schritt beinhaltet die Schäumung der Schicht A durch die Einwirkung von warmer Luft (155 °C) für ungefähr eine Minute. Nach dem Trocknungs-/Schäumungskanal wird der Prozessliner auf der mikroballonhaltigen Schicht A dekaschiert und die Schicht D zukaschiert.

**Beispiele 2 bis 4**

Nach demselben Verfahren werden folgende Haftklebestreifen hergestellt:

**Beispiel 2**

- 75 g/m$^2$ Schicht C
- 86 g/m$^2$ Schicht A
- 23 µm beidseitig geätzte PET-Folie als Schicht B
- 75 g/m$^2$ Schicht D

Das ergibt einen Haftklebestreifen mit einer Dicke von ungefähr 300 µm.

**Beispiel 3**

- 30 g/m$^2$ Schicht C
- 46 g/m$^2$ Schicht A
- 23 $\mu$m beiderseitig geätzte PET-Folie als Schicht B
- 30 g/m$^2$ Schicht D

Das ergibt einen Haftklebestreifen mit eine Dicke von ungefähr 150 $\mu$m.

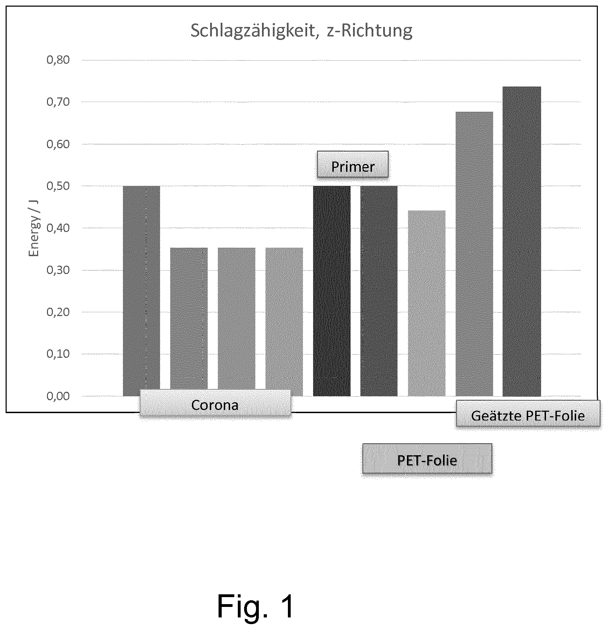

In der Figur 1 sind das Beispiel 2 und insgesamt sieben Vergleichsbeispielen gegenübergestellt. Hierbei ist die gemessene Schlagzähigkeit in z-Richtung verglichen. Das Beispiel 2 ist dabei zweimal vermessen worden.

Die Vergleichsbeispiele haben grundsätzlich den gleichen Aufbau, wie der in Beispiel 2 beschriebene Haftklebestreifen.

Allerdings wird nicht eine geätzte PET-Folie eingesetzt, sondern eine beidseitig ungeätzte PET-Folie.

Die Zugfestigkeit der in den Vergleichsbeispielen eingesetzten beidseitig ungeätzten Folien liegt bei größer 180 N/mm$^2$ in Längsrichtung und bei größer 200 N/mm$^2$ in Querrichtung. Die Reißdehnung der Folien liegt bei kleiner 300 % in Längsrichtung und bei kleiner 300 % in Querrichtung.

**Vergleichsbeispiele 1 bis 7**

- 75 g/m$^2$ Schicht C
- 86 g/m$^2$ Schicht A
- 23 $\mu$m PET-Folie als Schicht B
- 75 g/m$^2$ Schicht D

Das ergibt jeweils einen Haftklebestreifen mit einer Dicke von ungefähr 300 $\mu$m.

Um die Adhäsion zwischen der PET-Folie und der geschäumten Schicht zu steigern, sind dem Fachmann unterschiedliche Möglichkeiten bekannt.

In den ersten vier Vergleichsbeispielen (ersten vier Balken in Figur 1) wird eine Coronavorbehandlung eingesetzt, wobei die Oberfläche der PET-Folie und die Oberfläche der geschäumte Schicht, die später aufeinander laminiert werden, vor der Lamination besagter Coronavorbehandlung ausgesetzt werden.

Während der Coronavorbehandlung können (neben üblicher Luft) unterschiedliche Prozessgase wie Stickstoff zum Einsatz kommen, die eine Schutzgasatmosphäre ausbilden beziehungsweise die Coronavorbehandlung unterstützen.

Im Vergleichsbeispiel 1 werden die PET-Folienoberfläche und die Oberfläche der geschäumten Schicht unter Luft coronavorbehandelt.

Im Vergleichsbeispiel 2 wird die PET-Folienoberfläche unter Stickstoff und die Oberfläche der geschäumten Schicht ebenfalls unter Stickstoff coronavorbehandelt.

Im Vergleichsbeispiel 3 wird die PET-Folienoberfläche unter Stickstoff und die Oberfläche der geschäumten Schicht unter Luft coronavorbehandelt.

Im Vergleichsbeispiel 4 wird die PET-Folienoberfläche unter Luft und die Oberfläche der geschäumten Schicht unter Stickstoff coronavorbehandelt.

Des Weiteren ist dem Fachmann bekannt, zur Steigerung der Adhäsion Primer zwischen zwei Oberflächen einzusetzen.

In den Vergleichsbeispielen 5 und 6 (fünfter und sechster Balken in Figur 1) werden beide Oberflächen mit zwei handelsüblichen Primern auf Basis eines wässrigen vernetzenden Acrylats behandelt, bevor diese Oberflächen zusammenlaminiert werden.

Im Vergleichsbeispiel 7 (siebter Balken in Figur 1) wird eine unbehandelte 23 $\mu$m dicke PET-Folie (also weder geprimert, noch coronavorbehandelt) auf die klebende Oberfläche der geschäumten Schicht laminiert.

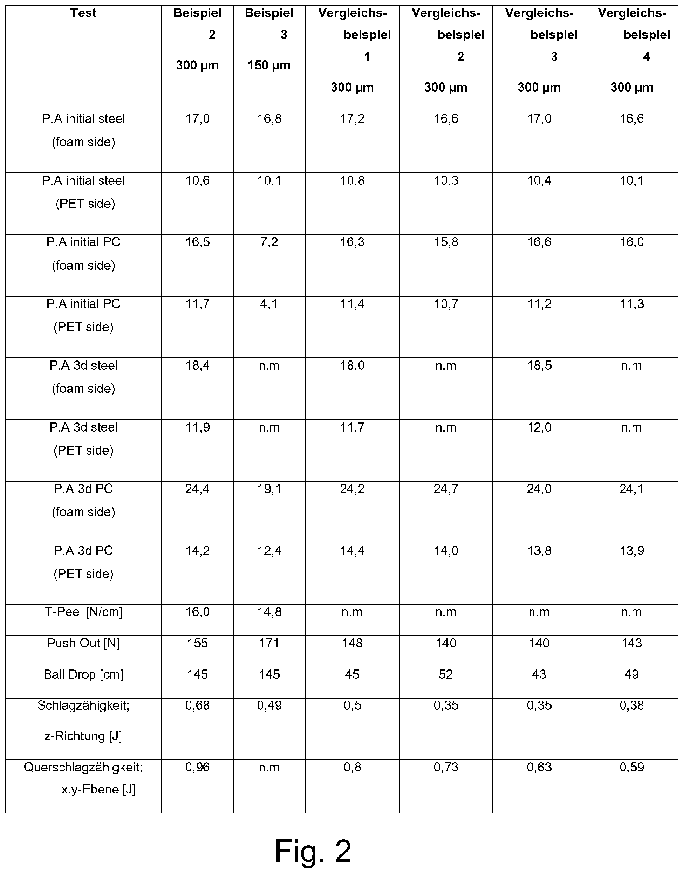

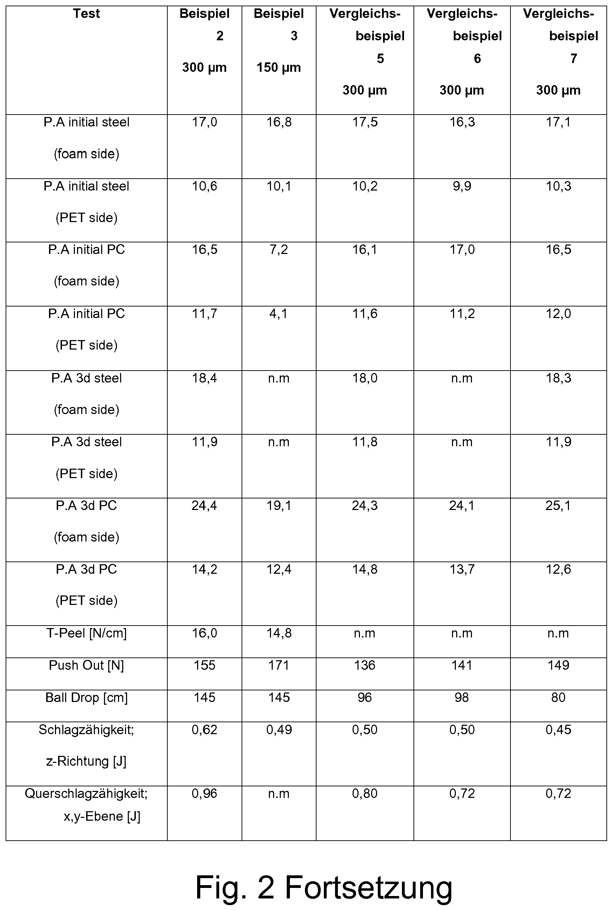

Die Klebkrafttests, wie sie in Figur 2 tabellarisch dargestellt sind, zeigen, dass die Verwendung einer geätzten PET-Folie gegenüber den bekannten Maßnahmen keine Vorteile bietet, alle Messergebnisse sind im Rahmen der Messgenauigkeit vergleichbar.

"PA initial steel (foam side)" bedeutet Sofortklebkraft auf Stahl, wobei der Haftklebestreifen so verklebt ist, dass die geschäumte Schicht zwischen Untergrund und PET-Folie ist.

"PA initial steel (PET side)" bedeutet Sofortklebkraft auf Stahl, wobei der Haftklebestreifen so verklebt ist, dass die PET-Folie zwischen Untergrund und geschäumter Schicht ist. "PA initial PC (foam side)" bedeutet Sofortklebkraft auf Polycarbonat, wobei der Haftklebestreifen so verklebt ist, dass die geschäumte Schicht zwischen Untergrund und PET-Folie ist.

"PA 3d steel (foam side)" bedeutet Klebkraft auf Stahl nach einer dreitägigen Lagerung, wobei der Haftklebnestreifen so verklebt ist, dass die geschäumte Schicht zwischen Untergrund und PET-Folie ist.

Die anderen Bedingungen bei der Klebkraftmessung ergeben sich entsprechend.

Die Verwendung einer geätzten PET-Folie zeigt weder bei der Sofortklebkraft noch bei der Klebkraft nach drei Tagen auf Stahl oder Polycarbonat einen nennenswerten Effekt.

Beim Push-Out-Test hingegen und auch bei der Schlagzähigkeit in z-Richtung und in x,y-Richtung ist eine signifikante Verbesserung der Eigenschaften durch die Verwendung einer geätzten PET-Folie im Vergleich zu einer Coronavorbehandlung, zu einer Primerung, insbesondere zu einer Primerung mit wässrigen, vernetzten acrylatbasierenden Primern, oder zu einer Nichtbehandlung der PET-Folienoberfläche erkennbar.

Bei Schockbelastung führt die Verwendung einer geätzten PET-Folie zu einem deutlich verbesserten Haftklebestreifen.

Die erfindungsgemäßen Haftklebestreifen sind sehr schlagzähfest. Dies ist dadurch erkennbar, dass sie insbesondere die nachfolgend aufgeführten Bedingungen (i) und (ii) erfüllen.

(i) Push-out-Festigkeit $\geq$ 120 N, bevorzugt $\geq$ 150 N
(ii) Schlagzähigkeit, z-Richtung $\geq$ 0,45 J, bevorzugt $\geq$ 0,5 J, sehr bevorzugt $\geq$ 0,6 J

Prüfmethoden

Alle Messungen wurden, sofern nichts anderes angegeben ist, bei 23 °C und 50 % rel. Luftfeuchtigkeit durchgeführt.

Die mechanischen und klebtechnischen Daten wurden wie folgt ermittelt:

*Reißdehnung und Zugfestigkeit (Methode R1)*

Die Reißdehnung und die Zugfestigkeit wurden in Anlehnung an DIN 53504 unter Verwendung von Schulterstäben der Größe S3 bei einer Separationsgeschwindigkeit von 300 mm pro Minute gemessen. Das Prüfklima betrug 23 °C und 50 % rel. Luftfeuchtigkeit.

*Klebharzerweichungstemperatur*

Die Klebharzerweichungstemperatur wird nach der einschlägigen Methodik durchgeführt, die als Ring & Ball bekannt ist und nach ASTM E28 standardisiert ist.

*Gelpermeationschromatographie GPC*

Die Angaben des Zahlenmittels der Molmasse Mn, des gewichtsmittleren Molekulargewichtes $M_W$ und der Polydispersität PD beziehen sich auf die Bestimmung per Gelpermeationschromatographie. Die Bestimmung erfolgt an 100 $\mu$L klarfiltrierter Probe (Probenkonzentration 1 g/L). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 $\mu$, $10^3$ Å, ID 8,0 mm $\times$ 50 mm verwendet. Zur Auftrennung werden die Säulen des Typs PSS-SDV, 5 $\mu$, $10^3$ Å sowie $10^5$ Å und $10^6$ Å mit jeweils ID 8,0 mm $\times$ 300 mm eingesetzt (Säulen der Firma Polymer Standards Service; Detektion mittels Differentialrefraktometer Shodex RI71). Die Durchflussmenge beträgt 1,0 mL pro Minute.

Die Kalibrierung erfolgt gegen PMMA-Standards (Polymethylmethacrylat-Kalibrierung) beziehungsweise bei (Synthese-)Kautschuken gegen Polystyrol.

*DACP*

Der DACP ist der Diaceton-Trübungspunkt und wird durch Abkühlen einer erhitzten Lösung von 5 g Harz, 5 g Xylol und 5 g Diacetonalkohol bis zu dem Punkt bestimmt, bei welchem die Lösung trübe wird.

*Kugelfalltest (Schlagzähigkeit, Ball drop)*

Aus dem zu untersuchenden Klebeband wurde eine quadratische, rahmenförmige Probe ausgeschnitten (Außenmaße 33 mm $\times$ 33 mm; Stegbreite 3,0 mm; Innenmaße (Fensterausschnitt) 27 mm $\times$ 27 mm). Diese Probe wurde auf einen ABS-Rahmen (Außenmaße 45 mm × 45 mm; Stegbreite 10 mm; Innenmaße (Fensterausschnitt) 25 mm × 25 mm; Dicke 3 mm) geklebt. Auf der anderen Seite des doppelseitigen Klebebands wurde ein PMMA-Fenster von 35 mm × 35 mm geklebt. Die Verklebung von ABS-Rahmen, Klebebandrahmen und PMMA-Fenster erfolgte derart, dass die geometrischen Zentren und die Diagonalen jeweils übereinanderlagen (Eck-auf-Eck). Die Verklebungsfläche betrug 360 mm$^2$. Die Verklebung wurde für 5 s mit 10 bar gepresst und für 24 Stunden konditioniert bei 23 °C / 50 % relativer Feuchte gelagert.

Unmittelbar nach der Lagerung wurde der Klebeverbund aus ABS-Rahmen, Klebeband und PMMA-Scheibe mit den überstehenden Kanten des ABS-Rahmens derart auf ein Rahmengestell (Probenhalter) gelegt, dass der Verbund waagerecht ausgerichtet war und die PMMA-Scheibe frei hängend nach unten zeigte. Auf die so angeordnete Probe wurde senkrecht aus einer Höhe von bis zu 250 cm (durch das Fenster des ABS-Rahmens hindurch) eine Stahlkugel mit dem jeweils angegebenen Gewicht zentriert auf die PMMA-Scheibe fallen gelassen (Messbedingungen 23 °C, 50 % relative Feuchte). Mit jeder Probe wurden drei Untersuchungen durchgeführt, sofern die PMMA-Scheibe sich nicht vorher gelöst hatte.

Der Kugelfalltest gilt als bestanden, wenn sich die Verklebung bei keiner der drei Untersuchungen gelöst hat.

Um Versuche mit unterschiedlichen Kugelgewichten vergleichen zu können, wurde die Energie wie folgt berechnet:

$$E = \text{Höhe [m]} * \text{Kugelgewicht [kg]} * 9{,}81 \text{ m/s}^2$$

*Push-out-Festigkeit (z-Ebene)*

Mittels des Push-Out-Tests lassen sich Aussagen darüber gewinnen, wie hoch die Beständigkeit einer Verklebung eines Bauteils in einem rahmenförmigen Körper ist, etwa eines Fensters in einem Gehäuse.

Aus dem zu untersuchenden Klebeband wurde eine rechteckige, rahmenförmige Probe ausgeschnitten (Außenmaße 43 mm × 33 mm; Stegbreite jeweils 2,0 mm, Innenmaße (Fensterausschnitt) 39 mm × 29 mm, Klebefläche auf Ober- und Unterseite jeweils 288 mm$^2$). Diese Probe wurde auf einen rechteckigen ABS-Kunststoffrahmen (ABS = AcrylnitrilButadien-Styrol-Copolymere) (Außenmaße 50 mm × 40 mm, Stegbreite der langen Stege jeweils 8 mm; Stegbreite der kurzen Stege jeweils 10 mm; Innenmaße (Fensterausschnitt) 30 mm × 24 mm; Dicke 3 mm) geklebt. Auf die andere Seite der Probe des doppelseitigen Klebebandes wurde eine rechteckige PMMA-Scheibe (PMMA = Polymethylmethacrylat) mit den Dimensionen 45 mm × 35 mm geklebt. Die volle zur Verfügung stehende Klebefläche des Klebebandes wurde genutzt. Die Verklebung von ABS-Rahmen, Klebebandprobe und PMMA-Fenster erfolgte derart, dass die geometrischen Zentren, die Winkelhalbierenden der spitzen Diagonalenwinkel und die Winkelhalbierenden der stumpfen Diagonalenwinkel der Rechtecke jeweils übereinanderlagen (Eck-auf-Eck, lange Seiten an lange Seiten, kurze Seiten an kurze Seiten). Die Verklebungsfläche betrug 288 mm$^2$. Die Verklebung wurde für 5 s mit 10 bar gepresst und für 24 Stunden konditioniert bei 23 °C / 50 % relativer Feuchte gelagert.

Unmittelbar nach der Lagerung wurde der Klebeverbund aus ABS-Rahmen, Klebeband und PMMA-Scheibe mit den überstehenden Kanten des ABS-Rahmens derart auf ein Rahmengestell (Probenhalter) gelegt, dass der Verbund waagerecht ausgerichtet war und die PMMA-Scheibe frei hängend nach unten zeigte.

Ein Druckstempel wird nun mit einer konstanten Geschwindigkeit von 10 mm/min senkrecht von oben durch das Fenster des ABS-Rahmens bewegt, so dass er zentral auf die PMMA-Platte drückt, und die jeweilige Kraft (ermittelt aus jeweiligem Druck und Kontaktfläche zwischen Stempel und Platte) in Abhängigkeit von der Zeit vom ersten Kontakt des Stempels mit der PMMA-Platte bis kurz nach deren Abfallen registriert (Messbedingungen 23 °C, 50 % relative Feuchte). Die unmittelbar vor dem Versagen der Klebeverbindung zwischen PMMA-Platte und ABS-Rahmen einwirkende Kraft (Maximalkraft $F_{max}$ im Kraft-Zeit-Diagramm in N) wird als Antwort des Push-Out-Tests registriert.

*Klebkraft*

Die Bestimmung der Klebkraft (gemäß AFERA 5001) wird wie folgt durchgeführt. Als definierter Haftgrund wird eine geschliffenen Stahlplatte (rostfreier Stahl 302 nach ASTM A 666; 50 mm × 125 mm × 1,1 mm; glänzende geglühte Oberfläche; Oberflächenrauhigkeit 50 ± 25 nm arithmetische Durchschnittsabweichung von der Basislinie) beziehungsweise ein Polycarbonat eingesetzt. Das zu untersuchende verklebbare Flächenelement wird auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss beziehungsweise nach dem Verstreichen von drei Tagen wird das verklebbare Flächenelement in einem Winkel von 180° vom Haftgrund mit einem Zugprüfungsgerät (Firma Zwick) mit einer Geschwindigkeit v = 300 mm/min abgezogen und die hierfür bei Raumtemperatur benötigte Kraft gemessen. Der Messwert (in N/cm) ergibt sich als Mittelwert aus drei Einzelmessungen.

*Statische Glasübergangstemperatur $T_g$*

Glasübergangspunkte - synonym als Glasübergangstemperaturen bezeichnet - werden angegeben als Ergebnis von Messungen mittels Dynamischer Differenzkalorimetrie DDK (englisch Dynamic Scanning Calorimetry; DSC) gemäß der DIN 53 765; insbesondere Abschnitte 7.1 und 8.1, jedoch mit einheitlichen Heiz- und Kühlraten von 10 K/min in allen Heiz- und Kühlschritten (vergleiche DIN 53 765; Abschnitt 7.1; Anmerkung 1). Die Probeneinwaage beträgt 20 mg.

*Schlagzähigkeit; z-Richtung*

Aus dem zu untersuchenden Klebeband wurde eine quadratische, rahmenförmige Probe ausgeschnitten (Außenmaße 33 mm × 33 mm; Stegbreite 2,0 mm; Innenmaße (Fensterausschnitt) 29 mm × 29 mm). Diese Probe wurde auf einen PC-Rahmen (Außenmaße 45 mm × 45 mm; Stegbreite 10 mm; Innenmaße (Fensterausschnitt) 25 mm × 25 mm; Dicke 3 mm) geklebt. Auf der anderen Seite des doppelseitigen Klebebands wurde ein PC-Fenster von 35 mm × 35 mm geklebt. Die Verklebung von PC-Rahmen, Klebebandrahmen und PC-Fenster erfolgte derart, dass die geometrischen Zentren und die Diagonalen jeweils übereinanderlagen (Eck-auf-Eck). Die Verklebungsfläche betrug 248 mm$^2$. Die Verklebung wurde für 5 s mit 248 N gepresst und für 24 Stunden konditioniert bei 23 °C / 50 % relativer Feuchte gelagert.

Unmittelbar nach der Lagerung wurde der Klebeverbund aus PC-Rahmen, Klebeband und PC-Fenster mit den überstehenden Kanten des PC-Rahmens derart in eine Probenhalterung gespannt, dass der Verbund waagerecht ausgerichtet war und das PC-Fenster sich unterhalb des Rahmens befand. Die Probenhalterung wurde anschließend in die vorgesehene Aufnahme des "DuPont Impact Tester" zentrisch eingesetzt. Der 190 g schwere Schlagkopf wurde so eingesetzt, dass die kreisförmige Aufschlaggeometrie mit dem Durchmesser von 20mm auf die Fensterseite des PC Fensters zentrisch und bündig auflag.

Auf den so angeordneten Verbund aus Probenhalterung, Probe und Schlagkopf wurde senkrecht ein an zwei Führungsstangen geführtes Gewicht mit einer Masse von 150 g aus einer Höhe von 5 cm fallengelassen (Messbedingungen 23 °C, 50 % relative Feuchte). Die Höhe des Fallgewichtes wurde in 5cm Schritten so lange erhöht bis die eingebrachte Stoßenergie die Probe durch die Schlagbelastung zerstört und das PC Fenster sich vom PC Rahmen löste.

Um Versuche mit unterschiedlichen Proben vergleichen zu können, wurde die Energie wie folgt berechnet:

$$E\ [J] = \text{Höhe [m]*Masse Gewicht [kg]*9,81 m/s}^2$$

Es wurden fünf Proben pro Produkt getestet und der Energiemittelwert als Kennzahl für die Schlagzähigkeit angegeben.

*Querschlagzähigkeit; x,y-Ebene*

Aus dem zu untersuchenden Klebeband wurde eine quadratische, rahmenförmige Probe ausgeschnitten (Außenmaße 33 mm × 33 mm; Stegbreite 2,0 mm; Innenmaße (Fensterausschnitt) 29 mm × 29 mm). Diese Probe wurde auf einen PC-Rahmen (Außenmaße 45 mm × 45 mm; Stegbreite 10 mm; Innenmaße (Fensterausschnitt) 25 mm × 25 mm; Dicke 3 mm) geklebt. Auf der anderen Seite des doppelseitigen Klebebands wurde ein PC-Fenster von 35 mm × 35 mm geklebt. Die Verklebung von PC-Rahmen, Klebebandrahmen und PC-Fenster erfolgte derart, dass die geometrischen Zentren und die Diagonalen jeweils übereinanderlagen (Eck-auf-Eck). Die Verklebungsfläche betrug 248 mm$^2$. Die Verklebung wurde für 5 s mit 248 N gepresst und für 24 Stunden konditioniert bei 23 °C / 50 % relativer Feuchte gelagert.

Unmittelbar nach der Lagerung wurde der Klebeverbund aus PC-Rahmen, Klebeband und PC-Scheibe Fenster mit den überstehenden Kanten des PC-Rahmens derart in eine Probenhalterung gespannt, dass der Verbund senkrecht ausgerichtet war. Die Probenhalterung wurde anschließend die vorgesehene Aufnahme des "DuPont Impact Tester" zentrisch eingesetzt. Der 300g schwere Schlagkopf wurde so eingesetzt, dass die rechteckförmige Aufschlaggeometrie mit den Maßen von 20mm × 3mm auf die nach oben gerichtete Stirnseite des PC Fensters zentrisch und bündig auflag.

Auf den so angeordneten Verbund aus Probenhalterung, Probe und Schlagkopf wurde senkrecht ein an zwei Führungsstangen geführtes Gewicht mit einer Masse von 150 g aus einer Höhe von 5cm fallengelassen (Messbedingungen 23 °C, 50 % relative Feuchte). Die Höhe des Fallgewichtes wurde in 5cm Schritten so lange erhöht bis die eingebrachte Stoßenergie die Probe durch die Querschlagbelastung zerstört und das PC Fenster sich vom PC Rahmen löste.

Um Versuche mit unterschiedlichen Proben vergleichen zu können, wurde die Energie wie folgt berechnet:

$$E\ [J] = \text{Höhe [m]*Masse Gewicht [kg]*9,81 m/s}^2$$

Es wurden fünf Proben pro Produkt getestet und der Energiemittelwert als Kennzahl für die Querschlagzähigkeit angegeben.

*Mikroschertest*

Dieser Test dient der Schnellprüfung der Scherfestigkeit von Klebebändern unter Temperaturbelastung.

*Messprobenpräparation für Mikroschertest:*

Ein aus dem jeweiligen Probenmuster geschnittenes Klebeband (Länge ca. 50 mm, Breite 10 mm) wird auf eine mit Aceton gereinigte Stahl-Prüfplatte verklebt, so dass die Stahlplatte das Klebeband rechts und links überragt und dass das Klebeband die Prüfplatte am oberen Rand um 2 mm überragt. Die Verklebungsfläche der Probe beträgt Höhe · Breite = 13 mm · 10 mm. Die Verklebungsstelle wird anschließend mit einer 2 kg-Stahlrolle und einer Geschwindigkeit von 10 m/min sechsmal überrollt. Das Klebeband wird bündig mit einem stabilen Klebestreifen verstärkt, der als Auflage für den Wegmessfühler dient. Die Probe wird mittels der Prüfplatte senkrecht aufgehängt.

*Mikroschertest:*

Das zu messende Probenmuster wird am unteren Ende mit einem Gewicht von 300 g belastet. Die Prüftemperatur beträgt 40 °C, die Prüfdauer 30 Minuten (15 Minuten Belastung und 15 Minuten Entlastung). Die Scherstrecke nach der vorgegebenen Testdauer bei konstanter Temperatur wird als Ergebnis in $\mu$m angegeben, und zwar als Maximalwert ["max"; maximale Scherstrecke durch 15 minütige Belastung]; als Minimalwert ["min"; Scherstrecke ("Restauslenkung") nach 15 min Entlastung; bei Entlastung erfolgt eine Rückbewegung durch Relaxation]. Angegeben wird ebenfalls der elastische Anteil in Prozent ["elast"; elastischer Anteil = (max - min)·100 / max].

*T-Peel-Test*

Das zu prüfende Laminat (insgesamt 3 Streifen, ca. 300 × 20 mm, bzw. in der vorgegeben Breite) wird an einem Ende des Prüflings manuell auseinander gezogen um zwei ca.100 mm lange Anfasser zu bilden, je nach Material unter Zuhilfenahme eines geeigneten Lösemittels, Messer o.a., oder gem. Vorgabe.

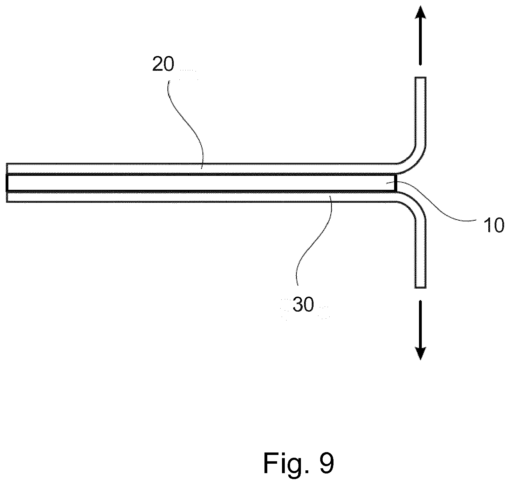

Der T-Peel-Test ist schematisch in der Figur 9 gezeigt.

Auf die Oberseite und auf die Unterseite des Haftklebestreifens 10 werden jeweils eine geätzte PET-Folie 20, 30 auflaminiert, wobei die PET-Folien 20, 30 an einer Seite des Haftklebestreifens 10 100 mm überstehen, um somit zwei Anfasser zu bilden. Der Haftklebestreifen 10 hat die Abmaße 300 × 20 mm².

Durch Umbiegen der Anfasser wird ein T geformt. Je ein Ende wird in der oberen und unteren Klemme in einer Zugprüfmaschine der Firma Zwick eingeklemmt. Die Maschine wird mit der vorgegebenen Geschwindigkeit gestartet.

Im 180° Ziehwinkel werden die Klemmen mit einer Geschwindigkeit von 50 mm/min auseinander gezogen und die Kraft pro Prüfkörper-Breite in N/cm gemessen, bei dem die Schaumschicht des Haftklebestreifens 10 spaltet (so genannter kohäsiver Bruch). Die Messwerte sind dreifach bestimmt und werden gemittelt.

**Patentansprüche**

**1.** Haftklebestreifen aus mindestens vier, insbesondere genau vier Schichten, umfassend

> • eine Schicht A mit einer Ober- und einer Unterseite aus einer geschäumten Klebemasse, die auf einer selbstklebenden Acrylatmasse basiert,
> • eine Schicht B aus einem Folienträger, wobei die Schicht B auf der Unterseite der Schicht A angeordnet ist, wobei zumindest die der Schicht A zugewandte Hauptfläche, vorzugsweise beide Hauptflächen des Folienträgers geätzt sind,
> wobei die Oberfläche der Schicht A und die Oberfläche der Schicht B in direktem Kontakt miteinander stehen,
> • eine Schicht C aus einer selbstklebenden Masse, die auf der Oberseite der Schicht A angeordnet ist und die auf einer selbstklebenden Acrylatmasse basiert,
> • eine Schicht D aus einer selbstklebenden Masse, die auf der der Schicht A gegenüberliegenden Seite der Schicht B angeordnet ist und die auf einer selbstklebenden Acrylatmasse basiert.

**2.** Haftklebestreifen nach Anspruch 1,
**dadurch gekennzeichnet, dass**
der Folienträger nichtdehnbar ist.

**3.** Haftklebestreifen nach Anspruch 1 oder Anspruch 2,
**dadurch gekennzeichnet, dass**
der Folienträger eine Zugfestigkeit von größer 100 N/mm², noch bevorzugter von größer 150 N/mm², noch bevorzugter von größer 180 N/mm², insbesondere von größer 200 N/mm², wie zum Beispiel von größer 270 N/mm2, in Längsrichtung, und bevorzugt von größer 100 N/mm², noch bevorzugter von größer 150 N/mm², noch bevorzugter von größer 180 N/mm², insbesondere von größer 200 N/mm², wie zum Beispiel von größer 270 N/mm², in Querrichtung aufweist.

**4.** Haftklebestreifen nach zumindest einem der vorhergehenden Ansprüche,
**dadurch gekennzeichnet, dass**
der Folienträger eine Reißdehnung von kleiner 300 %, noch bevorzugter von kleiner 200 %, insbesondere von kleiner 150 %, wie zum Beispiel von kleiner 100 %, in Längsrichtung, und bevorzugt von kleiner 300 %, noch bevorzugter von kleiner 200 %, insbesondere von kleiner 150%, wie zum Beispiel von kleiner 100 %, in Querrichtung aufweist.

**5.** Haftklebestreifen nach zumindest einem der vorhergehenden Ansprüche,
**dadurch gekennzeichnet, dass**
als Haftklebemassen für die Schichten A, C und/oder D acrylatbasierende Klebemassen verwendet werden.

**6.** Haftklebestreifen nach zumindest einem der vorhergehenden Ansprüche,
**dadurch gekennzeichnet, dass**
zur Bildung der acrylatbasierenden Klebemasse ein Polyacrylat eingesetzt wird, das auf die folgende Monomerzusammensetzung zurückgeführt werden kann:

a) Acrylsäureester und/oder Methacrylsäureester der folgenden Formel

$$CH_2=C(R^1)(COOR^2)$$

wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt,
b) olefinisch ungesättigte Monomere mit funktionellen Gruppen der für eine Reaktivität mit Epoxidgruppen bereits definierten Art,
c) optional weitere Acrylate und/oder Methacrylate und/oder olefinisch ungesättigte Monomere, die mit der Komponente (a) copolymerisierbar sind.

**7.** Haftklebestreifen nach zumindest einem der vorhergehenden Ansprüche,
**dadurch gekennzeichnet, dass**
den Haftklebemassen für die Schichten A, C und/oder D eine zweite, mit der Polyacrylat-Komponente im Wesentlichen nicht mischbare Polymerkomponente auf Elastomerbasis, insbesondere eines Synthesekautschuks (im Folgenden Elastomer-Komponente genannt) zugemischt ist.

**8.** Haftklebestreifen nach zumindest einem der vorhergehenden Ansprüche,
**dadurch gekennzeichnet, dass**
die Haftklebemassen für die Schichten A, C und/oder D zumindest die folgenden beiden Komponenten umfassen:

- zu 60 Gew.-% bis 90 Gew.-%, bevorzugt 65 Gew.-% bis 80 Gew.-% an der Klebemasse eine erste Polymerkomponente auf Polyacrylatbasis
- zu 10 Gew.-% bis 40 Gew.-%, bevorzugt 15 Gew.-% bis 30 Gew.-% an der Klebemasse eine zweite, mit der Polyacrylat-Komponente im Wesentlichen nicht mischbare Polymerkomponente auf Elastomerbasis, insbesondere eines Synthesekautschuks

**9.** Haftklebestreifen nach zumindest einem der vorhergehenden Ansprüche,
**dadurch gekennzeichnet, dass**
die Klebemasse der Schicht A eine vernetzbare Klebemasse ist, die insbesondere besteht aus

(a) zumindest einer ersten Basiskomponente mit

(a1) als erster Polymerkomponente eine Basispolymerkomponente (im Folgenden auch kurz als Basispolymer bezeichnet) aus einem Homopolymer, einem Copolymer oder einer homogenen Mischung aus mehreren Homopolymeren, mehreren Copolymeren oder einem oder mehreren Homopolymeren mit einem oder mehreren Copolymeren,
wobei zumindest eines der Homopolymere oder zumindest eines der Copolymere, insbesondere alle der Polymere der Basispolymerkomponente für die Vernetzung funktionelle Gruppen aufweisen,
(a2) gegebenenfalls weitere mit der Basispolymerkomponente homogen mischbare oder in diesem lösliche Bestandteile, wie Harze oder Additive, Monomerreste, kurzkettige Polymerisationsprodukte (Nebenprodukte), Verunreinigungen etc.;

(b) optional einer zweiten Komponente mit

(b1) als weitere Polymerkomponente mit dem Basispolymer im Wesentlichen nicht homogen mischbare Polymere, insbesondere solche ohne vernetzungsfähige Gruppen,
(b2) gegebenenfalls weitere mit dem Basispolymer im Wesentlichen nicht homogen mischbare und in diesem nicht lösliche Bestandteile, wie bestimmte Harze oder Additive, wobei die Komponente (f) insbesondere ganz oder teilweise mit der optional vorhandenen weiteren Polymerkomponente (b) homogen mischbar ist;

(c) Vernetzern, nämlich

(c1) zumindest einen kovalenten Vernetzer,
(c2) zumindest einen koordinativen Vernetzer,
und

(d) gegebenenfalls Lösemittel oder Lösemittelreste.

**10.** Haftklebestreifen nach zumindest einem der vorhergehenden Ansprüche,
**dadurch gekennzeichnet, dass**
den Haftklebemassen der Schichten A, C und/oder D 15 bis 100 Gewichtsteile Klebrigmacher hinzugefügt sind, bevorzugt 20 bis 80 Gewichtsteile, weiter bevorzugt 30 bis 50 Gewichtsteile.

**11.** Haftklebestreifen nach zumindest einem der vorhergehenden Ansprüche,
**dadurch gekennzeichnet, dass**
die Haftklebemassen, die die Schicht A und/oder C und/oder D bilden, eine Polymermischung aus Acrylaten und Synthesekautschuken umfassen, wobei der Polymermischung ein oder mehrere Vernetzer sowie Klebrigmacher zugemischt sind.

**12.** Haftklebestreifen nach zumindest einem der vorhergehenden Ansprüche,
**dadurch gekennzeichnet, dass**
es sich bei den Klebharzen zu mindestens 75 Gew.% um Kohlenwasserstoffharze oder Terpenharze oder eine Mischung dergleichen handelt.

**13.** Haftklebestreifen nach zumindest einem der vorhergehenden Ansprüche,
**dadurch gekennzeichnet, dass**
die Schicht C und die Schicht D die identische Zusammensetzung aufweisen, vorzugsweise die Schicht A (abgesehen von den in der Schicht A zugesetzten Mikroballons, dem gegebenenfalls anderen Vernetzungssystem sowie den gegebenenfalls zusätzlich zugegebenen Farbstoffen), die Schicht C und die Schicht D eine identische Zusammensetzung.

**14.** Haftklebestreifen nach zumindest einem der vorhergehenden Ansprüche,
**dadurch gekennzeichnet, dass**
für die Schicht A ein anderes Vernetzungssystem als für die Schichten C und/oder D eingesetzt wird.

**15.** Haftklebestreifen nach zumindest einem der vorhergehenden Ansprüche,
**dadurch gekennzeichnet, dass**

die Dicke der Schichten C und D zwischen 10 und 120 $\mu$m liegt, weiter vorzugsweise dass die Dicke der Schicht A zwischen 20 und 5000 $\mu$m liegt.

16. Haftklebestreifen nach zumindest einem der vorhergehenden Ansprüche,
**dadurch gekennzeichnet, dass**
Mikroballons zur Schäumung der Polymermatrix der Schicht A verwendet werden.

17. Haftklebestreifen nach zumindest einem der vorhergehenden Ansprüche,
**dadurch gekennzeichnet, dass**
nicht oder nur wenig vorexpandierte Mikroballons in die Polymermatrix der Schicht A eingearbeitet werden, die erst nach dem Einarbeiten expandiert werden.

18. Haftklebestreifen nach zumindest einem der vorhergehenden Ansprüche,
**dadurch gekennzeichnet, dass**
für die Schicht die Mikroballons so gewählt werden, dass das Verhältnis der Dichte der Polymermatrix der Schicht A zu der Dichte der in die Polymermatrix der Schicht A einzuarbeitenden (nicht oder nur wenig vorexpandierten) Mikroballons zwischen 1 und 1:6 liegt.

19. Verwendung eines Haftklebestreifens nach zumindest einem der vorhergehenden Ansprüche zur Verklebung von Bauteilen wie insbesondere Akkus und elektronischen Geräten wie insbesondere Handys.

**Claims**

1. Pressure-sensitive adhesive strip composed of at least four and especially exactly four layers, comprising

   • a layer A having a top side and a bottom side composed of a foamed adhesive composition based on a self-adhesive acrylate composition,
   • a layer B composed of a film carrier, where layer B is arranged on the bottom side of layer A, where at least the main face facing layer A and preferably both main faces of the film carrier have been etched, where the surface of layer A and the surface of layer B are in direct contact with one another,
   • a layer C composed of a self-adhesive composition which is arranged on the top side of layer A and is based on a self-adhesive acrylate composition,
   • a layer D composed of a self-adhesive composition which is arranged on the opposite side of layer B from layer A and is based on a self-adhesive acrylate composition.

2. Pressure-sensitive adhesive strip according to Claim 1,
**characterized in that**
the film carrier is non-extensible.

3. Pressure-sensitive adhesive strip according to Claim 1 or Claim 2,
**characterized in that**
the film carrier has a tensile strength of greater than 100 N/mm$^2$, more preferably of greater than 150 N/mm$^2$, more preferably of greater than 180 N/mm$^2$, and especially of greater than 200 N/mm$^2$, for example of greater than 270 N/mm$^2$, in longitudinal direction, and preferably of greater than 100 N/mm$^2$, more preferably of greater than 150 N/mm$^2$, more preferably of greater than 180 N/mm$^2$, especially of greater than 200 N/mm$^2$, for example of greater than 270 N/mm$^2$, in transverse direction.

4. Pressure-sensitive adhesive strip according to at least one of the preceding claims,
**characterized in that**
the film carrier has an elongation at break of less than 300%, more preferably of less than 200%, especially of less than 150%, for example of less than 100%, in longitudinal direction, and preferably of less than 300%, more preferably of less than 200%, especially of less than 150%, for example of less than 100%, in transverse direction.

5. Pressure-sensitive adhesive strip according to at least one of the preceding claims,
**characterized in that**
the pressure-sensitive adhesive compositions used for layers A, C and/or D are acrylate-based adhesive compositions.

6. Pressure-sensitive adhesive strip according to at least one of the preceding claims, **characterized in that** the acrylate-based adhesive composition is formed using a polyacrylate which can be derived from the following monomer composition:

a) acrylic ester and/or methacrylic ester of the following formula: $CH_2=C(R^1)(COOR^2)$ where $R^1$ = H or $CH_3$ and $R^2$ = H or linear, branched or cyclic, saturated or unsaturated alkyl radicals having 1 to 30 and especially having 4 to 18 carbon atoms,
b) olefinically unsaturated monomers having functional groups of the type already defined for reactivity with epoxy groups,
c) optionally further acrylates and/or methacrylates and/or olefinically unsaturated monomers copolymerizable with component (a).

7. Pressure-sensitive adhesive strip according to at least one of the preceding claims, **characterized in that** a second, elastomer-based polymer component essentially immiscible with the polyacrylate component, especially a synthetic rubber (called "elastomer component" hereinafter), has been mixed into the pressure-sensitive adhesive compositions for layers A, C and/or D.

8. Pressure-sensitive adhesive strip according to at least one of the preceding claims, **characterized in that** the pressure-sensitive adhesive compositions for layers A, C and/or D comprise at least the following two components:

- 60% by weight to 90% by weight, preferably 65% by weight to 80% by weight, of the adhesive composition of a first, polyacrylate-based polymer component,
- 10% by weight to 40% by weight, preferably 15% by weight to 30% by weight, of the adhesive composition of a second, elastomer-based polymer component essentially immiscible with the polyacrylate component, especially a synthetic rubber.

9. Pressure-sensitive adhesive strip according to at least one of the preceding claims, **characterized in that** the adhesive composition of layer A is a crosslinkable adhesive composition especially consisting of

(a) at least one first base component comprising

(a1) as the first polymer component a base polymer component (also referred to hereinafter as base polymer for short) composed of a homopolymer, a copolymer or a homogeneous mixture of two or more homopolymers, two or more copolymers or one or more homopolymers with one or more copolymers, where at least one of the homopolymers or at least one of the copolymers, especially all the polymers, in the base polymer component have groups that are functional in respect of the crosslinking,
(a2) optionally further constituents that are homogeneously miscible with or soluble in the base polymer component, such as resins or additives, monomer residues, short-chain polymerization products (by-products), impurities etc.;

(b) optionally a second component comprising

(b1) as a further polymer component polymers that are essentially not homogeneously miscible with the base polymer, especially those having no crosslinkable groups,
(b2) optionally further constituents that are essentially not homogeneously miscible with and insoluble in the base polymer, such as particular resins or additives, where component (f) is especially wholly or partly homogeneously miscible with the further polymer component (b) optionally present;

(c) crosslinkers, namely

(c1) at least one covalent crosslinker,
(c2) at least one coordinative crosslinker,
and

(d) optionally solvents or solvent residues.

10. Pressure-sensitive adhesive strip according to at least one of the preceding claims,
**characterized in that** 15 to 100 parts by weight of tackifier have been added to the pressure-sensitive adhesive compositions of layers A, C and/or D, preferably 20 to 80 parts by weight, more preferably 30 to 50 parts by weight.

11. Pressure-sensitive adhesive strip according to at least one of the preceding claims,
**characterized in that**
the pressure-sensitive adhesive compositions that form layer A and/or C and/or D comprise a polymer mixture of acrylates and synthetic rubbers, where one or more crosslinkers and tackifiers have been mixed into the polymer mixture.

12. Pressure-sensitive adhesive strip according to at least one of the preceding claims,
**characterized in that**
the tackifying resins to an extent of at least 75% by weight are hydrocarbon resins or terpene resins or a mixture of the same.

13. Pressure-sensitive adhesive strip according to at least one of the preceding claims,
**characterized in that**
layer C and layer D have the same composition, and preferably layer A (apart from the microballoons added in layer A, any other crosslinking system and any dyes additionally added), layer C and layer D have an identical composition.

14. Pressure-sensitive adhesive strip according to at least one of the preceding claims,
**characterized in that**
a different crosslinking system is used for layer A than for layers C and/or D.

15. Pressure-sensitive adhesive strip according to at least one of the preceding claims,
**characterized in that**
the thickness of layers C and D is between 10 and 120 $\mu$m, and the thickness of layer A is further preferably between 20 and 5000 $\mu$m.

16. Pressure-sensitive adhesive strip according to at least one of the preceding claims,
**characterized in that**
microballoons are used for foaming of the polymer matrix of layer A.

17. Pressure-sensitive adhesive strip according to at least one of the preceding claims,
**characterized in that**
microballoons that have been pre-expanded only slightly, if at all, are incorporated into the polymer matrix of layer A and are expanded only after having been incorporated.

18. Pressure-sensitive adhesive strip according to at least one of the preceding claims,
**characterized in that**
the microballoons for the layer are chosen such that the ratio of the density of the polymer matrix of layer A to the density of the (non-pre-expanded or only slightly pre-expanded) microballoons to be incorporated into the polymer matrix of layer A is between 1 and 1:6.

19. Use of a pressure-sensitive adhesive strip according to at least one of the preceding claims for bonding of components such as, in particular, accumulators and electronic devices such as, in particular, cellphones.

**Revendications**

1. Bande autoadhésive constituée d'au moins quatre, en particulier exactement de quatre couches, comprenant

• une couche A ayant une face supérieure et une face inférieure, en une masse adhésive expansée, qui est à base d'une masse d'acrylate autoadhésive,
• une couche B en un film support, la couche B étant disposée sur la face inférieure de la couche A, au moins la surface principale dirigée vers la couche A, de préférence les deux surfaces principales du film support, étant attaquées,
la surface de la couche A et la surface de la couche B étant en contact direct l'une avec l'autre,
• une couche C en une masse autoadhésive, qui est disposée sur la face supérieure de la couche A et est à base d'une masse d'acrylate autoadhésive,
• une couche D en une masse autoadhésive, qui est disposée sur la face de la couche B opposée à la couche A, et qui est à base d'une masse d'acrylate autoadhésive.

**2.** Bande autoadhésive selon la revendication 1, **caractérisée en ce que** le film support est inextensible.

**3.** Bande autoadhésive selon la revendication 1 ou la revendication 2,
**caractérisée en ce que** le film support présente une résistance à la traction supérieure à 100 N/mm², plus préférentiellement supérieure à 150 N/mm², plus préférentiellement supérieure à 180 N/mm², en particulier supérieure à 200 N/mm², par exemple supérieure à 270 N/mm² dans le sens machine, et de préférence supérieure à 100 N/mm², plus préférentiellement supérieure à 150 N/mm², plus préférentiellement supérieure à 180 N/mm², en particulier supérieure à 200 N/mm², par exemple supérieure à 270 N/mm² dans le sens travers.

**4.** Bande autoadhésive selon au moins l'une des revendications précédentes,
**caractérisée en ce que** le film support présente un allongement à la rupture inférieur à 300 %, plus préférentiellement inférieur à 200 %, en particulier inférieur à 150 %, par exemple inférieur à 100 % dans le sens machine, et de préférence inférieur à 300 %, plus préférentiellement inférieur à 200 %, en particulier inférieur à 150 %, par exemple inférieur à 100 % dans le sens travers.

**5.** Bande autoadhésive selon au moins l'une des revendications précédentes,
**caractérisée en ce qu'**on utilise en tant que masses autoadhésives pour les couches A, C et/ou D des masses adhésives à base d'acrylate.

**6.** Bande autoadhésive selon au moins l'une des revendications précédentes,
**caractérisée en ce que**, pour la formation de la masse adhésive à base d'acrylate, on utilise un polyacrylate qui peut se rattacher à la composition de monomères suivante :

a) esters de l'acide acrylique et/ou esters de l'acide méthacrylique ayant la formule suivante

$$CH_2=C(R^1)(COOR^2)$$

dans laquelle $R^1$ = H ou $CH_3$ et $R^2$ = H ou représente des radicaux alkyle linéaires, ramifiés ou cycliques, saturés ou insaturés, ayant 1 à 30, en particulier 4 à 18 atomes de carbone,
b) monomères à insaturation oléfinique comportant des groupes fonctionnels du type déjà défini pour une réactivité avec des groupes époxydes,
c) éventuellement acrylates et/ou méthacrylates supplémentaires et/ou monomères à insaturation oléfinique qui peuvent se copolymériser avec le composant (a).

**7.** Bande autoadhésive selon au moins l'une des revendications précédentes,
**caractérisée en ce qu'**on mélange aux masses autoadhésives, pour les couches A, C et/ou D, un second composant polymère, pour l'essentiel non miscible au composant polyacrylate, à base d'un élastomère, en particulier d'un caoutchouc de synthèse (ci-après appelé composant élastomère).

**8.** Bande autoadhésive selon au moins l'une des revendications précédentes,
**caractérisée en ce que** les masses autoadhésives pour les couches A, C et/ou D comprennent au moins les deux composants suivants :

- à raison de 60 % en poids à 90 % en poids, de préférence de 65 % en poids à 80 % en poids par rapport à la masse adhésive, un premier composant polymère à base de polyacrylate,
- à raison de 10 % en poids à 40 % en poids, de préférence de 15 % en poids à 30 % en poids par rapport à la masse adhésive, un second composant polymère, pour l'essentiel non miscible au composant polyacrylate, à base d'élastomère, en particulier d'un caoutchouc de synthèse.

**9.** Bande autoadhésive selon au moins l'une des revendications précédentes,
**caractérisée en ce que** la masse adhésive de la couche A est une masse adhésive réticulable, qui en particulier est constituée

(a) d'au moins un premier composant de base comportant

(a1) en tant que premier composant polymère, un composant polymère de base (ci-après abrégé en polymère de base) constitué d'un homopolymère, d'un copolymère ou d'un mélange homogène de plusieurs homopolymères, de plusieurs copolymères ou d'un ou plusieurs homopolymères avec un ou plusieurs copolymères,
au moins l'un des homopolymères ou au moins l'un des copolymères, en particulier tous les polymères du composant polymère de base, présentant des groupes fonctionnels pour la réticulation,
(a2) éventuellement, des constituants supplémentaires, miscibles jusqu'à homogénéité au composant polymère de base ou solubles dans ce dernier, tels que des résines ou des additifs, des radicaux monomères, des produits de polymérisation à courte chaîne (produits secondaires), des impuretés, etc. ;

(b) éventuellement, d'un second composant comportant

(b1) en tant que composant polymère supplémentaire, des polymères pour l'essentiel non miscibles jusqu'à homogénéité au polymère de base, en particulier ceux qui ne possèdent pas de groupes réticulables,
(b2) éventuellement, des constituants supplémentaires, pour l'essentiel non miscibles jusqu'à homogénéité au polymère de base et insolubles dans ce dernier, tels que certaines résines ou certains additifs, le composant (f) étant en particulier miscible en totalité ou en partie, jusqu'à homogénéité, au composant polymère supplémentaire (b) éventuellement présent ;

(c) d'agents de réticulation, plus précisément

(c1) au moins un agent de réticulation par liaison covalente,
(c2) au moins un agent de réticulation par liaison par coordination,
et

(d) éventuellement, des solvants ou des résidus de solvants.

**10.** Bande autoadhésive selon au moins l'une des revendications précédentes,
**caractérisée en ce qu'**on ajoute aux masses autoadhésives des couches A, C et/ou D 15 à 100 parties en poids d'un agent de pégosité, de préférence 20 à 80 parties en poids, plus préférentiellement 30 à 50 parties en poids.

**11.** Bande autoadhésive selon au moins l'une des revendications précédentes,
**caractérisée en ce que** les masses autoadhésives qui forment les couches A et/ou C et/ou D comprennent un mélange de polymères constitué d'acrylates et de caoutchoucs de synthèse, le mélange de polymères étant additionné d'un ou plusieurs agents de réticulation et agents de pégosité.

**12.** Bande autoadhésive selon au moins l'une des revendications précédentes,
**caractérisée en ce que**, pour ce qui concerne les résines adhésives, il s'agit à raison d'moins 75 % en poids de résines hydrocarbonées ou de résines terpéniques ou d'un mélange de celles-ci.

**13.** Bande autoadhésive selon au moins l'une des revendications précédentes,
**caractérisée en ce que** la couche C et la couche D ont des compositions identiques, de préférence la couche A (indépendamment des micro-ballons ajoutés à la couche A, de l'éventuel autre système de réticulation, ainsi que des colorants ajoutés éventuellement en plus), la couche C et/ou la couche D ont des compositions identiques.

**14.** Bande autoadhésive selon au moins l'une des revendications précédentes,
**caractérisée en ce qu'**on utilise pour la couche A un système de réticulation différent de celui pour les couches C et/ou D.

**15.** Bande autoadhésive selon au moins l'une des revendications précédentes,
**caractérisée en ce que** l'épaisseur des couches C et D est comprise entre 10 et 120 $\mu$m, plus préférentiellement **en ce que** l'épaisseur de la couche A est comprise entre 20 et 5 000 $\mu$m.

**16.** Bande autoadhésive selon au moins l'une des revendications précédentes,

**caractérisée en ce qu'**on utilise des micro-ballons pour expanser la matrice polymère de la couche A.

17. Bande autoadhésive selon au moins l'une des revendications précédentes,
    **caractérisée en ce qu'**on incorpore dans la matrice polymère de la couche A des micro-ballons, qui ne sont pas pré-expansés, ou seulement peu pré-expansés, qui ne sont expansés qu'après l'incorporation.

18. Bande autoadhésive selon au moins l'une des revendications précédentes,
    **caractérisée en ce que**, pour la couche, on choisit des micro-ballons de telle sorte que le rapport entre la masse volumique de la matrice polymère de la couche A et la masse volumique des micro-ballons (non pré-expansés ou seulement peu pré-expansés) à incorporer dans la matrice polymère de la couche A, soit compris entre 1 et 1:6.

19. Utilisation d'une bande autoadhésive selon au moins l'une des revendications précédentes pour coller des composants tels en particulier que des accumulateurs et des appareils électroniques, en particulier des téléphones mobiles.

Fig. 1

| Test | Beispiel 2 300 µm | Beispiel 3 150 µm | Vergleichs-beispiel 1 300 µm | Vergleichs-beispiel 2 300 µm | Vergleichs-beispiel 3 300 µm | Vergleichs-beispiel 4 300 µm |
|---|---|---|---|---|---|---|
| P.A initial steel (foam side) | 17,0 | 16,8 | 17,2 | 16,6 | 17,0 | 16,6 |
| P.A initial steel (PET side) | 10,6 | 10,1 | 10,8 | 10,3 | 10,4 | 10,1 |
| P.A initial PC (foam side) | 16,5 | 7,2 | 16,3 | 15,8 | 16,6 | 16,0 |
| P.A initial PC (PET side) | 11,7 | 4,1 | 11,4 | 10,7 | 11,2 | 11,3 |
| P.A 3d steel (foam side) | 18,4 | n.m | 18,0 | n.m | 18,5 | n.m |
| P.A 3d steel (PET side) | 11,9 | n.m | 11,7 | n.m | 12,0 | n.m |
| P.A 3d PC (foam side) | 24,4 | 19,1 | 24,2 | 24,7 | 24,0 | 24,1 |
| P.A 3d PC (PET side) | 14,2 | 12,4 | 14,4 | 14,0 | 13,8 | 13,9 |
| T-Peel [N/cm] | 16,0 | 14,8 | n.m | n.m | n.m | n.m |
| Push Out [N] | 155 | 171 | 148 | 140 | 140 | 143 |
| Ball Drop [cm] | 145 | 145 | 45 | 52 | 43 | 49 |
| Schlagzähigkeit; z-Richtung [J] | 0,68 | 0,49 | 0,5 | 0,35 | 0,35 | 0,38 |
| Querschlagzähigkeit; x,y-Ebene [J] | 0,96 | n.m | 0,8 | 0,73 | 0,63 | 0,59 |

# Fig. 2

| Test | Beispiel 2 300 µm | Beispiel 3 150 µm | Vergleichs- beispiel 5 300 µm | Vergleichs- beispiel 6 300 µm | Vergleichs- beispiel 7 300 µm |
|---|---|---|---|---|---|
| P.A initial steel (foam side) | 17,0 | 16,8 | 17,5 | 16,3 | 17,1 |
| P.A initial steel (PET side) | 10,6 | 10,1 | 10,2 | 9,9 | 10,3 |
| P.A initial PC (foam side) | 16,5 | 7,2 | 16,1 | 17,0 | 16,5 |
| P.A initial PC (PET side) | 11,7 | 4,1 | 11,6 | 11,2 | 12,0 |
| P.A 3d steel (foam side) | 18,4 | n.m | 18,0 | n.m | 18,3 |
| P.A 3d steel (PET side) | 11,9 | n.m | 11,8 | n.m | 11,9 |
| P.A 3d PC (foam side) | 24,4 | 19,1 | 24,3 | 24,1 | 25,1 |
| P.A 3d PC (PET side) | 14,2 | 12,4 | 14,8 | 13,7 | 12,6 |
| T-Peel [N/cm] | 16,0 | 14,8 | n.m | n.m | n.m |
| Push Out [N] | 155 | 171 | 136 | 141 | 149 |
| Ball Drop [cm] | 145 | 145 | 96 | 98 | 80 |
| Schlagzähigkeit; z-Richtung [J] | 0,62 | 0,49 | 0,50 | 0,50 | 0,45 |
| Querschlagzähigkeit; x,y-Ebene [J] | 0,96 | n.m | 0,80 | 0,72 | 0,72 |

# Fig. 2 Fortsetzung

Fig. 3a

Fig. 3b

E + MB

13

11    12

31    32

M

M

33

1

3

TP

Fig. 4

E + MB

13

11   12

UM

31   32

M

33

1

21

M

2

3

TP

# Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   DE 4313008 A1

**In der Beschreibung aufgeführte Nicht-Patentliteratur**

*   **T.G. FOX.** *Bull. Am. Phys. Soc.,* 1956, vol. 1, 123

*   *CHEMICAL ABSTRACTS,* 63738-22-7